(19) Europäisches Patentamt
European Patent Office
Office européen des brevets

(11) **EP 4 572 263 A1**

(12) **EUROPEAN PATENT APPLICATION**
published in accordance with Art. 153(4) EPC

(43) Date of publication:
**18.06.2025 Bulletin 2025/25**

(21) Application number: **22963015.7**

(22) Date of filing: **25.10.2022**

(51) International Patent Classification (IPC):
**H04L 27/00** (2006.01)

(52) Cooperative Patent Classification (CPC):
**H04L 27/00**

(86) International application number:
**PCT/CN2022/127438**

(87) International publication number:
**WO 2024/087028 (02.05.2024 Gazette 2024/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Huawei Technologies Co., Ltd.
Shenzhen, Guangdong 518129 (CN)**

(72) Inventors:
• LIU, Yao
  Shenzhen, Guangdong 518129 (CN)
• LIU, Qiao
  Shenzhen, Guangdong 518129 (CN)
• GAO, Kuandong
  Shenzhen, Guangdong 518129 (CN)

(74) Representative: **Pfenning, Meinig & Partner mbB
Patent- und Rechtsanwälte
Theresienhöhe 11a
80339 München (DE)**

(54) **CHANNEL MEASUREMENT METHOD AND APPARATUS**

(57)    A channel measurement method and an apparatus are provided, to improve channel measurement precision, thereby reducing impact of a phase discrimination on consistency error estimation and improving precision of the consistency error estimation. The method includes: A network device sends a first CSI-RS 1 to a first CSI-RS N to a terminal device through N first antenna ports, and sends N second CSI-RSs to the terminal device through a second antenna port. The terminal device receives the first CSI-RS 1 to the first CSI-RS N from the N first antenna ports, to obtain a measurement quantity of channel measurement corresponding to the first CSI-RS, and receives the N second CSI-RSs from the second antenna port, to estimate a phase discrimination. The terminal device sends first information to the network device, where the first information indicates results of channel measurement corresponding to the first CSI-RSs, and the results of the channel measurement are determined based on the phase discrimination and the measurement quantities of the channel measurement, where N is a positive integer.

Network device | Terminal device

S501: Send first CSI-RSs i through N first antenna ports, where i is a positive integer from 1 to N, and the first CSI-RSs i are used for channel measurement

S502: Send N second CSI-RSs through a second antenna port, where the N second CSI-RSs are used to estimate a phase discrimination

S503: First information, indicating results of the channel measurement corresponding to the first CSI-RSs i, where the results are determined based on the phase discrimination and channel measurement quantities

FIG. 5

**Description**

**TECHNICAL FIELD**

Embodiments of this application relate to the communication field, and in particular, to a channel measurement method and an apparatus.

**BACKGROUND**

In a phased array antenna system, one receive/transmit channel usually corresponds to a plurality of array elements (referred to as channel array elements), and an amplitude and phase (amplitude-phase for short) difference between array elements in the plurality of array elements is referred to as a consistency error of the channel array elements. The consistency error not only affects precise directing of a phased array antenna beam during array signal processing, but also causes performance deterioration of technologies such as a high-resolution spectrum estimation technology, a super-resolution direction of arrival estimation technology, various adaptive beamforming algorithms, and a null-steering algorithm for multi-user interference avoidance.

To meet a requirement of the foregoing technologies on amplitude-phase consistency of the channel array elements, the consistency error of the channel array elements needs to be monitored and corrected, which is essentially precise measurement or estimation on the consistency error of the channel array elements. Currently, a commonly used consistency error estimation method is a simple method based on time-based vector rotation. A principle of the vector rotation method is as follows: A plurality of rounds of measurement are performed by adjusting an amplitude and/or a phase of a weighted vector of a transmit end in a time-based manner, and results of the plurality of rounds of measurement are combined to find a solution, to estimate a consistency error.

In a current vector rotation solution, it is usually assumed that phase discriminations of measured values are the same in the plurality of rounds of measurement. However, during actual application, phase discriminations of measured values of a same channel may be different at different moments due to factors such as jitter or location movement of a device crystal oscillator. Precision of consistency error estimation is greatly reduced due to impact of the different phase discriminations of the measured values at the different moments.

**SUMMARY**

This application provides a channel measurement method and an apparatus, to improve channel measurement precision.

According to a first aspect, a channel measurement method is provided. The method may be performed by a terminal device, or may be performed by a component of a terminal device, for example, a processor, a chip, or a chip system of the terminal device, or may be implemented by a logical module or software that can implement all or some functions of a terminal device. The method includes: receiving first channel state information-reference signals CSI-RSs i from N first antenna ports of a network device, where i is a positive integer from 1 to N, and N is a positive integer greater than 1; receiving N second CSI-RSs from a second antenna port of the network device, where the first CSI-RSs i are used for channel measurement, and the N second CSI-RSs are used to estimate a phase discrimination; and sending first information to the network device, where the first information indicates results of the channel measurement corresponding to the first CSI-RSs i, and the results of the channel measurement are determined based on the phase discrimination and measurement quantities of the channel measurement.

Based on this solution, the terminal device receives the N second CSI-RSs from the second antenna port of the network device, to estimate the phase discrimination, and receives the first CSI-RSs i from the N first antenna ports of the network device, to perform the channel measurement. The results of the channel measurement corresponding to the first CSI-RSs i are determined based on the phase discrimination and the measurement quantities. In other words, the phase discrimination is considered in the results of the channel measurement corresponding to the first CSI-RSs i. Therefore, precision of the results of the channel measurement corresponding to the first CSI-RSs i can be improved. Further, in a consistency error estimation scenario, impact of the phase discrimination on consistency error estimation can be reduced, thereby improving precision of the consistency error estimation. In addition, in the solution of this application, no additional hardware needs to be added, and the phase discrimination can be estimated by using an existing antenna port of a transmit end. Therefore, complexity is low, and application costs can be reduced.

In a possible design, the first CSI-RS i and an $i^{th}$ second CSI-RS satisfy at least one of the following: a time domain position of the first CSI-RS i is the same as a time domain position of the $i^{th}$ second CSI-RS; or a frequency domain position of the first CSI-RS i is different from a frequency domain position of the $i^{th}$ second CSI-RS.

Based on this possible design, when the time domain position of the first CSI-RS i is the same as the time domain position of the $i^{th}$ second CSI-RS, a phase discrimination of a channel measurement quantity corresponding to the second CSI-RS may approximate a phase discrimination of a channel measurement quantity corresponding to the first CSI-RS, so that phase compensation can be performed on the channel measurement quantity corresponding to the first CSI-RS by using the phase discrimination estimated based on the second CSI-RS.

In a possible design, the method further includes: determining the phase discrimination based on M channel measurement quantities corresponding to M second CSI-RSs. M is a positive integer less than or equal to N.

In a possible design, the determining the phase discrimination based on M channel measurement quantities corresponding to M second CSI-RSs includes: determining a $j^{th}$ element of the phase discrimination based on a channel measurement quantity corresponding to a $j^{th}$ second CSI-RS, or determining a $j^{th}$ element of the phase discrimination based on a ratio of a channel measurement quantity corresponding to a $j^{th}$ second CSI-RS to a first value. Herein, j is a positive integer from 1 to M, and the M elements of the phase discrimination are located on a main diagonal of the phase discrimination matrix.

In a possible design, the first value is a channel measurement quantity corresponding to an $m^{th}$ second CSI-RS, and m is a positive integer from 1 to M; or the first value is a preset value.

In a possible design, the phase discrimination matrix $\boldsymbol{D}$ satisfies:

$$\boldsymbol{D} = diag(\Delta\theta)$$

$$\Delta\theta = angle\left(\left[\frac{y_1^B}{C} \frac{y_2^B}{C} \frac{y_3^B}{C} \cdots \frac{y_N^B}{C}\right]\right), \text{ or } \Delta\theta = angle([y_1^B \; y_2^B \; y_3^B \cdots y_N^B]),$$

where

$diag$ is used to construct a diagonal matrix, $\Delta\theta$ is the phase discrimination, $angle$ is used to solve a phase angle, $y_j^B$ represents the channel measurement quantity corresponding to the $j^{th}$ second CSI-RS, and C represents the first value.

In a possible design, the first information includes the phase discrimination and the measurement quantities of the channel measurement. Alternatively, the first information includes the phase discrimination and a value obtained based on the measurement quantities of the channel measurement. Alternatively, the first information includes the results of the channel measurement.

In a possible design, the method further includes: receiving second information from the network device. The second information indicates the terminal device to estimate, based on channel measurement quantities corresponding to the second antenna port, a phase discrimination of channel measurement quantities corresponding to the N first antenna ports, or the second information indicates the terminal device to determine, based on channel measurement quantities corresponding to the second antenna port, results of channel measurement corresponding to the N first antenna ports.

Based on this possible design, by using the second information from the network device, the terminal device can learn an antenna port and a CSI-RS used for phase discrimination estimation and an antenna port and a CSI-RS used for channel measurement, so that the terminal device can correctly process the received CSI-RS, to obtain the phase discrimination and the result of the channel measurement.

In a possible design, receiving a first CSI-RS I from the network device through a first antenna port I includes: repeatedly receiving the first CSI-RS I K times through the first antenna port I. I is a positive integer from 1 to N, and K is a positive integer. Receiving an $I^{th}$ second CSI-RS from the network device through the second antenna port includes: repeatedly receiving the $I^{th}$ second CSI-RS K times through the second antenna port.

Based on this possible design, the first CSI-RS and the $I^{th}$ second CSI-RS are repeatedly sent, so that the terminal device can determine channel measurement quantities based on the CSI-RS repeatedly received a plurality of times, and perform noise reduction on a channel measurement quantity obtained through a single time of receiving, to improve precision of the channel measurement quantity.

In a possible design, the method further includes: receiving third information from the network device. The third information indicates a repetition quantity K of the first CSI-RS I.

In a possible design, a channel measurement quantity corresponding to the first CSI-RS I is an average value of the channel measurement quantities corresponding to the first CSI-RS I repeatedly received K times. A channel measurement quantity corresponding to the $I^{th}$ second CSI-RS is an average value of channel measurement quantities corresponding to the $I^{th}$ second CSI-RS repeatedly received K times.

In a possible design, the result of the channel measurement, the phase discrimination, and the measurement quantity of the channel measurement satisfy:

$$\boldsymbol{Y}_{comp}^A = [\exp(\boldsymbol{D})]^{-1} * \boldsymbol{Y}^A,$$

where

$Y^A_{comp}$ represents the result of the channel measurement, **D** represents the phase discrimination matrix, an element of the phase discrimination is located on the main diagonal of the phase discrimination matrix, **Y**$^A$ represents the measurement quantity of the channel measurement, and exp represents an exponential function with a natural constant e as a base.

In a possible design, the sending first information to the network device includes: sending the first information to the network device based on a reporting period.

According to a second aspect, a channel measurement method is provided. The method may be performed by a network device, or may be performed by a component of a network device, for example, a processor, a chip, or a chip system of the network device, or may be implemented by a logical module or software that can implement all or some functions of a network device. The method includes: sending first channel state information-reference signals CSI-RSs i to a terminal device through N first antenna ports, where i is a positive integer from 1 to N, and N is a positive integer greater than 1; sending N second CSI-RSs to the terminal device through a second antenna port, where The first CSI-RSs i are used for channel measurement, and the N second CSI-RSs are used to estimate a phase discrimination; and receiving first information from the terminal device, where the first information indicates results of the channel measurement corresponding to the first CSI-RSs i, and the results of the channel measurement is determined based on the phase discrimination and measurement quantities of the channel measurement.

Based on this solution, the network device sends the N second CSI-RSs through the second antenna port, to estimate the phase discrimination, and sends the first CSI-RS i through the N first antenna ports, to perform the channel measurement. The results of the channel measurement corresponding to the first CSI-RSs i are determined based on the phase discrimination and the measurement quantity. In other words, the phase discrimination is considered in the results of the channel measurement corresponding to the first CSI-RSs i. Therefore, precision of the results of the channel measurement corresponding to the first CSI-RSs i can be improved. Further, in a consistency error estimation scenario, impact of the phase discrimination on consistency error estimation can be reduced, thereby improving precision of the consistency error estimation. In addition, in the solution of this application, no additional hardware needs to be added, and the phase discrimination can be estimated by using an existing antenna port of a transmit end. Therefore, complexity is low, and application costs can be reduced.

In a possible design, the first CSI-RS i and an i$^{th}$ second CSI-RS satisfy at least one of the following: a time domain position of the first CSI-RS i is the same as a time domain position of the i$^{th}$ second CSI-RS; or a frequency domain position of the first CSI-RS i is different from a frequency domain position of the i$^{th}$ second CSI-RS.

In a possible design, the phase discrimination is determined based on M channel measurement quantities corresponding to M second CSI-RSs. M is a positive integer less than or equal to N.

In a possible design, the phase discrimination includes M elements, and the M elements are located on a main diagonal of a phase discrimination matrix. A j$^{th}$ element is determined based on a channel measurement quantity corresponding to a j$^{th}$ second CSI-RS, or a j$^{th}$ element is determined based on a ratio of a channel measurement quantity corresponding to a j$^{th}$ second CSI-RS to a first value. Herein, j is a positive integer from 1 to M.

In a possible design, the first value is a channel measurement quantity corresponding to an m$^{th}$ second CSI-RS, and m is a positive integer from 1 to M; or the first value is a preset value.

In a possible design, the phase discrimination matrix **D** satisfies:

$$\mathbf{D} = diag(\Delta\theta)$$

$$\Delta\theta = angle\left(\left[\frac{y^B_1}{C} \ \frac{y^B_2}{C} \ \frac{y^B_3}{C} \ \cdots \ \frac{y^B_N}{C}\right]\right), \text{ or } \Delta\theta = angle\left(\left[y^B_1 \ y^B_2 \ y^B_3 \ \cdots y^B_N\right]\right),$$

where

*diag* is used to construct a diagonal matrix, $\Delta\theta$ is the phase discrimination, *angle* is used to solve a phase angle, $y^B_j$ represents the channel measurement quantity corresponding to the j$^{th}$ second CSI-RS, and C represents the first value.

In a possible design, the first information includes the phase discrimination and the measurement quantities of the channel measurement. Alternatively, the first information includes the phase discrimination and a value obtained based on the measurement quantities of the channel measurement. Alternatively, the first information includes the results of the channel measurement.

In a possible design, the method further includes: sending second information to the terminal device. The second information indicates the terminal device to estimate, based on channel measurement quantities corresponding to the second antenna port, a phase discrimination of channel measurement quantities corresponding to the N first antenna ports, or the second information indicates the terminal device to determine, based on channel measurement quantities corresponding to the second antenna port, results of channel measurement corresponding to the N first antenna ports.

In a possible design, sending a first CSI-RS I to the terminal device through a first antenna port I includes: repeatedly sending the first CSI-RS I to the terminal device K times through the first antenna port I. I is a positive integer from 1 to N, and K is a positive integer. Sending an I$^{th}$ second CSI-RS to the terminal device through second antenna port includes: repeatedly sending the I$^{th}$ second CSI-RS to the terminal device K times through the second antenna port.

In a possible design, the method further includes: sending third information to the terminal device, where the third information indicates a repetition quantity K of the first CSI-RS I.

In a possible design, the result of the channel measurement, the phase discrimination, and the measurement quantity of the channel measurement satisfy:

$$Y^A_{comp} = [\exp(\boldsymbol{D})]^{-1} * Y^A,$$

where

$Y^A_{comp}$ represents the result of the channel measurement, **D** represents the phase discrimination matrix, an element of the phase discrimination is located on the main diagonal of the phase discrimination matrix, $Y^A$ represents the measurement quantity of the channel measurement, and exp represents an exponential function with a natural constant e as a base.

For technical effects achieved by any possible design of the second aspect, refer to technical effects achieved by the corresponding design of the first aspect. Details are not described herein again.

According to a third aspect, a communication apparatus is provided, configured to implement various methods. The communication apparatus may be the terminal device in the first aspect, or an apparatus included in the terminal device, for example, a chip or a chip system. Alternatively, the communication apparatus may be the network device in the second aspect, or an apparatus included in the network device, for example, a chip or a chip system. When the apparatus is the chip system, the apparatus may include a chip, or may include a chip and another discrete component.

The communication apparatus includes corresponding modules, units, or means (means) for implementing the methods. The modules, units, or means may be implemented by hardware, software, or hardware executing corresponding software. The hardware or the software includes one or more modules or units corresponding to functions.

In some possible designs, the communication apparatus may include a processing module and a transceiver module. The processing module may be configured to implement a processing function according to any one of the foregoing aspects and the possible implementations of the foregoing aspects. The transceiver module may also be referred to as a transceiver unit, and is configured to implement a sending function and/or a receiving function according to any one of the foregoing aspects and the possible implementations of the foregoing aspects. The transceiver module may include a transceiver circuit, a transceiver machine, a transceiver, or a communication interface.

In some possible designs, the transceiver module includes a sending module and/or a receiving module, respectively configured to implement the sending function or the receiving function according to any one of the foregoing aspects and the possible implementations of the foregoing aspects.

According to a fourth aspect, a communication apparatus is provided, including a processor and a communication interface. The communication interface is configured to communicate with a module other than the communication apparatus, and the processor is configured to execute a computer program or instructions, so that the communication apparatus is enabled to perform the method according to any aspect. The communication apparatus may be the terminal device in the first aspect, or an apparatus included in the terminal device, for example, a chip or a chip system. Alternatively, the communication apparatus may be the network device in the second aspect, or an apparatus included in the network device, for example, a chip or a chip system. When the apparatus is the chip system, the apparatus may include a chip, or may include a chip and another discrete component.

According to a fifth aspect, a communication apparatus is provided, including at least one processor. The processor is configured to execute a computer program or instructions stored in a memory, so that the communication apparatus is enabled to perform the method according to any aspect. The memory may be coupled to the processor, or the memory may be independent of the processor. For example, the memory and the processor are two independent modules. The memory may be located outside the communication apparatus, or may be located inside the communication apparatus. The communication apparatus may be the terminal device in the first aspect, or an apparatus included in the terminal device, for example, a chip or a chip system. Alternatively, the communication apparatus may be the network device in the second aspect, or an apparatus included in the network device, for example, a chip or a chip system. When the apparatus is the chip system, the apparatus may include a chip, or may include a chip and another discrete component.

According to a sixth aspect, a computer-readable storage medium is provided. The computer-readable storage medium stores a computer program or instructions. When the program or instructions are run on a communication apparatus, the communication apparatus is enabled to perform the method according to any aspect.

According to a seventh aspect, a computer program product including instructions is provided. When the computer program product runs on a communication apparatus, the communication apparatus is enabled to perform the method according to any aspect.

It may be understood that, when the communication apparatus provided in any one of the third aspect to the seventh aspect is a chip, a sending action/function of the communication apparatus may be understood as outputting information, and a receiving action/function of the communication apparatus may be understood as inputting information.

For technical effects achieved in any one of the design manners of the third aspect to the seventh aspect, refer to technical effects achieved in different design manners of the first aspect or the second aspect. Details are not described herein again.

According to an eighth aspect, a communication system is provided. The communication system includes the terminal device in the foregoing aspects and the network device in the foregoing aspects.

## BRIEF DESCRIPTION OF DRAWINGS

FIG. 1 is a diagram of a structure of a communication system according to this application;

FIG. 2 is a diagram of a structure of a communication apparatus according to this application;

FIG. 3a is a diagram of impact of a consistency error on output power according to this application;

FIG. 3b is a diagram of impact of a consistency error on energy of a side lobe according to this application;

FIG. 4 is a diagram of a channel and a channel array element according to this application;

FIG. 5 is a schematic flowchart of a channel measurement method according to this application;

FIG. 6 is a diagram of a time-frequency domain position of a CSI-RS according to this application;

FIG. 7 is a diagram of channel grouping according to this application;

FIG. 8 is a diagram of a principle of a channel measurement method according to this application;

FIG. 9 is a diagram of simulation results obtained when phase discrimination compensation is performed and when phase discrimination compensation is not performed according to this application;

FIG. 10 is a diagram of a time-frequency domain position of another CSI-RS according to this application;

FIG. 11 is a diagram of a structure of a network device and a terminal device according to this application; and

FIG. 12 is a diagram of a structure of another communication apparatus according to an embodiment of this application.

## DESCRIPTION OF EMBODIMENTS

In the description of this application, unless otherwise specified, the character "/" indicates that associated objects are in an "or" relationship. For example, A/B may indicate A or B. The term "and/or" in this application merely describes an association relationship between associated objects and indicates that three relationships may exist. For example, A and/or B may indicate three cases: Only A exists, both A and B exist, or only B exists, where A and B may be singular or plural.

In addition, in the descriptions of this application, "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, words such as "first" and "second" are used in embodiments of this application to distinguish between same items or similar items that provide basically same functions or effects. A person skilled in the art may understand that the words such as "first" and "second" do not limit a quantity or an execution sequence, and the words such as "first" and "second" do not indicate a definite difference.

In addition, in embodiments of this application, the word "example" or "for example" is used to indicate giving an example, an illustration, or a description. Any embodiment or design scheme described as an "example" or "for example" in embodiments of this application should not be explained as being more preferred or having more advantages than another embodiment or design scheme. Exactly, use of the words such as "example" or "for example" is intended to present a related concept in a specific manner for ease of understanding.

It may be understood that an "embodiment" mentioned throughout this specification means that particular features, structures, or characteristics related to this embodiment are included in at least one embodiment of this application. Therefore, embodiments in the entire specification are not necessarily a same embodiment. In addition, these particular features, structures, or characteristics may be combined in one or more embodiments in any appropriate manner. It may be understood that sequence numbers of processes do not mean execution sequences in various embodiments of this application. The execution sequences of the processes should be determined based on functions and internal logic of the processes, and should not constitute any limitation on the implementation processes of embodiments of this application.

It may be understood that in some scenarios, some optional features in embodiments of this application may be independently implemented without depending on another feature, for example, a solution on which the optional features are currently based, to resolve a corresponding technical problem and achieve corresponding effects. Alternatively, in some scenarios, the optional features may be combined with other features according to a requirement. Correspondingly, the apparatus provided in embodiments of this application may also correspondingly implement these features or functions. Details are not described herein.

In this application, unless otherwise specified, for same or similar parts of embodiments, refer to each other. In embodiments of this application, unless otherwise specified or a logical conflict occurs, terms and/or descriptions in different embodiments are consistent and may be mutually referenced, and different embodiments may be combined based on an internal logical relationship thereof, to form a new embodiment. The following implementations of this application do not constitute a limitation on the protection scope of this application.

The technical solutions provided in this application may be applied to various communication systems. The communication system may be a 3rd generation partnership project (3rd generation partnership project, 3GPP) communication system, for example, a 4th generation (4th generation, 4G) long term evolution (long term evolution, LTE) system, a 5th generation (5th generation, 5G) new radio (new radio, NR) system, a vehicle to everything (vehicle to everything, V2X) system, an LTE-NR hybrid networking system, a device to device (device to device, D2D) system, a machine to machine (machine to machine, M2M) communication system, an internet of things (internet of things, IoT), or another next-generation communication system. Alternatively, the communication system may be a non-3GPP communication system. This is not limited.

The foregoing communication systems to which this application is applicable are merely examples for description, and communication systems to which this application is applicable are not limited thereto. This is uniformly described herein. Details are not described below again.

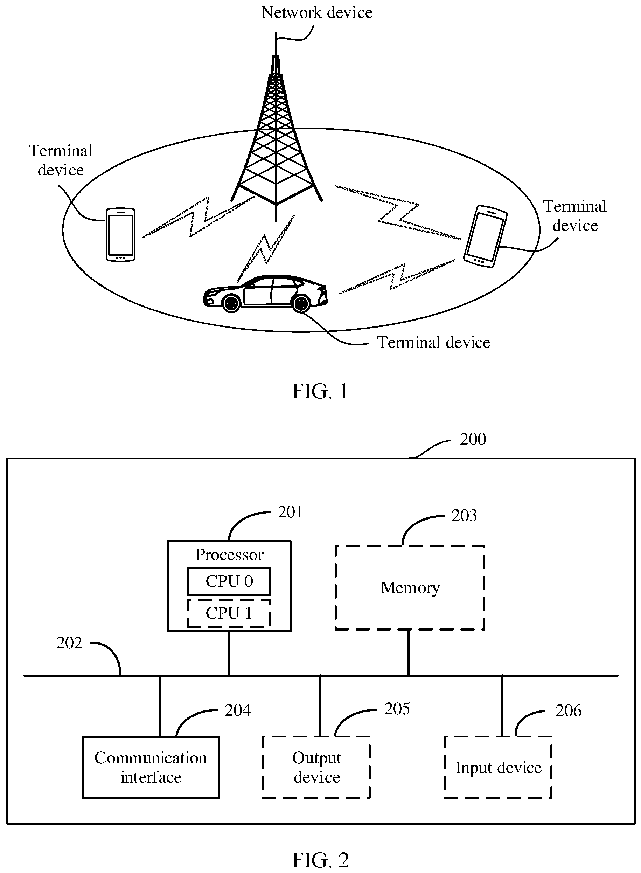

For example, FIG. 1 shows a communication system to which the solutions of this application are applicable according to this application. The communication system includes a network device and at least one terminal device. Optionally, the terminal devices may communicate with each other.

Optionally, the terminal device may be a user-side device that has a wireless transceiver function. The terminal device may also be referred to as user equipment (user equipment, UE), a terminal, an access terminal, a subscriber unit, a subscriber station, a mobile station (mobile station, MS), a remote station, a remote terminal, a mobile terminal (mobile terminal, MT), a user terminal, a wireless communication device, a user agent, a user apparatus, or the like. The terminal device may be a wireless terminal in IoT, V2X, D2D, M2M, a 5G network, or a future evolved PLMN. The terminal device may be deployed on land, and includes an indoor device, an outdoor device, a handheld device, or a vehicle-mounted device; may be deployed on water (for example, on a ship); or may be deployed in air (for example, on a plane, a balloon, or a satellite).

For example, the terminal device may be an uncrewed aerial vehicle, an IoT device (for example, a sensor, an electricity meter, or a water meter), a V2X device, a station (station, ST) in a wireless local area network (wireless local area network, WLAN), a cellular phone, a cordless phone, a session initiation protocol (session initiation protocol, SIP) phone, a wireless local loop (wireless local loop, WLL) station, a personal digital assistant (personal digital assistant, PDA) device, a handheld device having a wireless communication function, a computing device or another processing device connected to a wireless modem, a vehicle-mounted device, a wearable device (which may also be referred to as a wearable smart device), a tablet computer or a computer having a wireless transceiver function, a virtual reality (virtual reality, VR) terminal, a wireless terminal in industrial control (industrial control), a wireless terminal in self driving (self driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a vehicle-mounted terminal, a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, or the like. The terminal may be mobile or fixed. This is not specifically limited in this application.

Optionally, the terminal device in embodiments of this application may alternatively be a device in a form of base station that merely plays a role of the terminal device in this application.

Optionally, the network device is a device for connecting the terminal device to a wireless network, and may be an evolved Node B (evolved Node B, eNB or eNodeB) in an LTE or LTE-advanced (LTE-Advanced, LTE-A) system, for example, a conventional macro base station eNB and a micro base station eNB in a heterogeneous network scenario; may be a next generation NodeB (next generation node B, gNodeB or gNB) in a 5G system; may be a transmission reception point (transmission reception point, TRP); may be a base station in a future evolved public land mobile network (public land mobile network, PLMN); may be a broadband network gateway (broadband network gateway, BNG), an aggregation switch, or a non-3GPP access device; may be a radio controller in a cloud radio access network (cloud radio access network, CRAN); may be an access node (access point, AP) in a Wi-Fi system; may be a radio relay node or a radio backhaul node; or may be a device for implementing a base station function in IoT, a device for implementing a base station function in V2X, a device for implementing a base station function in D2D, or a device for implementing a base station function in M2M. This is not specifically limited in embodiments of this application.

For example, the base station in embodiments of this application may include base stations in various forms, for example, a macro base station, a micro base station (also referred to as a small cell), a relay station, and an access point. This is not specifically limited in embodiments of this application.

Optionally, during specific implementation, the network device may be a central unit (central unit, CU) or a distributed unit (distributed unit, DU), or the network device may include the CU and the DU. Division may be performed on the CU and the DU based on protocol layers of the wireless network. For example, functions of a radio resource control (radio resource control, RRC) protocol layer, a service data adaptation protocol (service data adaptation protocol, SDAP) layer, and a packet data convergence protocol (packet data convergence protocol, PDCP) layer are set in the CU, and functions of a radio link control (radio link control, RLC) layer, a media access control (media access control, MAC) layer, and a physical (physical, PHY) layer are set in the DU.

It may be understood that division into processing functions of the CU and the DU based on the protocol layers is merely an example, and division may alternatively be performed in another manner. This is not specifically limited in embodiments of this application.

In some embodiments, the CU may include a CU control plane (CU control plane, CU-CP) and a CU user plane (CU user plane, CU-UP).

The communication system shown in FIG. 1 is merely an example for description. The communication system does not constitute any limitation on the solutions of this application, and a communication system to which the solutions of this application are applicable is not limited thereto.

Optionally, during specific implementation, the terminal device and the network device shown in FIG. 1 may use a composition structure shown in FIG. 2, or include components shown in FIG. 2. FIG. 2 is a diagram of composition of a communication apparatus 200 according to this application. The communication apparatus 200 may be a terminal device, or a chip or a system on a chip in the terminal device, or may be a network device, or a module, a chip, or a system on a chip in the network device.

As shown in FIG. 2, the communication apparatus 200 includes at least one processor 201 and at least one communication interface (in FIG. 2, an example in which one communication interface 204 and one processor 201 are included is merely used for description). Optionally, the communication apparatus 200 may further include a communication bus 202 and a memory 203.

The processor 201 may be a general-purpose central processing unit (central processing unit, CPU), a general-purpose processor, a network processor (network processor, NP), a digital signal processor (digital signal processor, DSP), a microprocessor, a microcontroller, a programmable logic device (programmable logic device, PLD), or any combination thereof. Alternatively, the processor 201 may be another apparatus having a processing function, for example, a circuit, a component, or a software module. This is not limited.

The communication bus 202 is configured to connect different components in the communication apparatus 200, so that the different components can communicate with each other. The communication bus 202 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 2, but this does not mean that there is only one bus or only one type of bus.

The communication interface 204 is configured to communicate with another device or a communication network. For example, the communication interface 204 may be a transceiver module, a transceiver circuit, a transceiver, or any apparatus that can implement communication. Alternatively, the communication interface 204 may be an input/output interface located in the processor 201, and is configured to implement signal input and signal output of the processor.

The memory 203 may be an apparatus having a storage function, and is configured to store instructions and/or data. The instructions may be a computer program.

For example, the memory 203 may be a read-only memory (read-only memory, ROM) or another type of static storage device that can store static information and/or instructions, may be a random access memory (random access memory, RAM) or another type of dynamic storage device that can store information and/or instructions, or may be an electrically erasable programmable read-only memory (electrically erasable programmable read-only memory, EEPROM), a compact disc read-only memory (compact disc read-only memory, CD-ROM) or another compact disc storage, optical disc storage (including a compressed optical disc, a laser disc, an optical disc, a digital universal optical disc, a Blu-ray optical disc, and the like), a magnetic disk storage medium or another magnetic storage device, or the like. This is not limited.

It should be noted that the memory 203 may exist independently of the processor 201, or may be integrated with the processor 201. The memory 203 may be located in the communication apparatus 200, or may be located outside the communication apparatus 200. This is not limited.

Optionally, the processor 201 may be configured to process a communication protocol and communication data, control the entire communication apparatus, execute a software program, and process data of the software program. The memory 203 may be configured to store a software program and data. When the communication interface 204 is a transceiver, the communication interface 204 may include a radio frequency circuit and an antenna. The radio frequency circuit is mainly configured to: perform conversion between a baseband signal and a radio frequency signal, and process the radio frequency signal. The antenna is mainly configured to receive and send radio frequency signals in a form of electromagnetic wave. The antenna may be a phased array antenna, and may include a multi-array element antenna array. The multi-array element antenna array may be provided with a phase shifter or an antenna turn-off switch.

After the communication apparatus is powered on, the processor 201 may read the software program in the memory 203, interpret and execute instructions of the software program, and process the data of the software program. When data needs to be sent wirelessly, the processor 201 performs baseband processing on the to-be-sent data, and then outputs a baseband signal to the radio frequency circuit. The radio frequency circuit performs radio frequency processing on the baseband signal, and then sends a radio frequency signal in a form of electromagnetic wave through the antenna. When data is sent to the communication apparatus, the radio frequency circuit receives a radio frequency signal through the antenna, converts the radio frequency signal into a baseband signal, and outputs the baseband signal to the processor 201. The processor 201 converts the baseband signal into data, and processes the data.

In an implementation, the radio frequency circuit and the antenna may be disposed independently of the processor that performs baseband processing. For example, in a distributed scenario, the radio frequency circuit and the antenna may be disposed remotely independent of the communication apparatus.

In an optional implementation, the communication apparatus 200 may further include an output device 205 and an input device 206. The output device 205 communicates with the processor 201, and may display information in a plurality of manners. For example, the output device 205 may be a liquid crystal display (liquid crystal display, LCD), a light-emitting diode (light-emitting diode, LED) display device, a cathode ray tube (cathode ray tube, CRT) display device, or a projector (projector). The input device 206 communicates with the processor 201, and may receive an input from a user in a plurality of manners. For example, the input device 206 may be a mouse, a keyboard, a touchscreen device, or a sensor device.

It should be noted that the structure shown in FIG. 2 does not constitute a specific limitation on the terminal device or the network device. For example, in some other embodiments of this application, the terminal device or the network device may include more or fewer components than those shown in the figure, or combine some components, or split some components, or have different component arrangements. The components shown in the figure may be implemented by hardware, software, or a combination of software and hardware.

For ease of understanding the technical solutions in embodiments of this application, related technologies of this application are first briefly described below.

A channel array element may also be referred to as an antenna array element or an antenna element. One channel may correspond to a plurality of channel array elements. For one channel, a receive end receives a combined (or superposed) value of signals sent by a plurality of channel array elements corresponding to the channel.

A consistency error of channel array elements is an amplitude and/or a phase difference between different channel array elements. The amplitude and the phase of the channel array element may be respectively understood as an amplitude variation and a phase variation of a signal after the signal passes through the channel array element.

Antenna port: The antenna port is a logical concept. One antenna port may correspond to one physical transmit antenna, or may correspond to a plurality of physical transmit antennas. In both of the cases, a receiver (receiver) of a terminal device does not decompose signals from a same antenna port. The reason is as follows: From a perspective of the terminal device, regardless of whether a channel is formed by a single physical transmit antenna or is formed by combining a plurality of physical transmit antennas, a reference signal (reference signal, RS) corresponding to the antenna port defines the antenna port, and the terminal device may perform channel estimation and data demodulation based on the reference signal corresponding to the antenna port.

During actual application, excellent performance of key technologies such as a high-resolution spectrum estimation technology and a super-resolution direction of arrival estimation technology in fields such as radio communication radars, sonar seismic detection and navigation, radio astronomy, and medicine depends on good channel array element consistency. However, the consistency error of the channel array elements inevitably exists in various application scenarios, resulting in impact on performance of the foregoing key technologies.

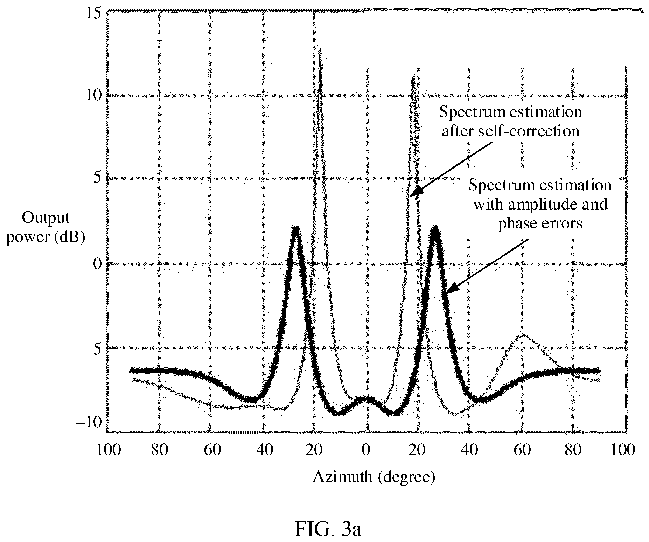

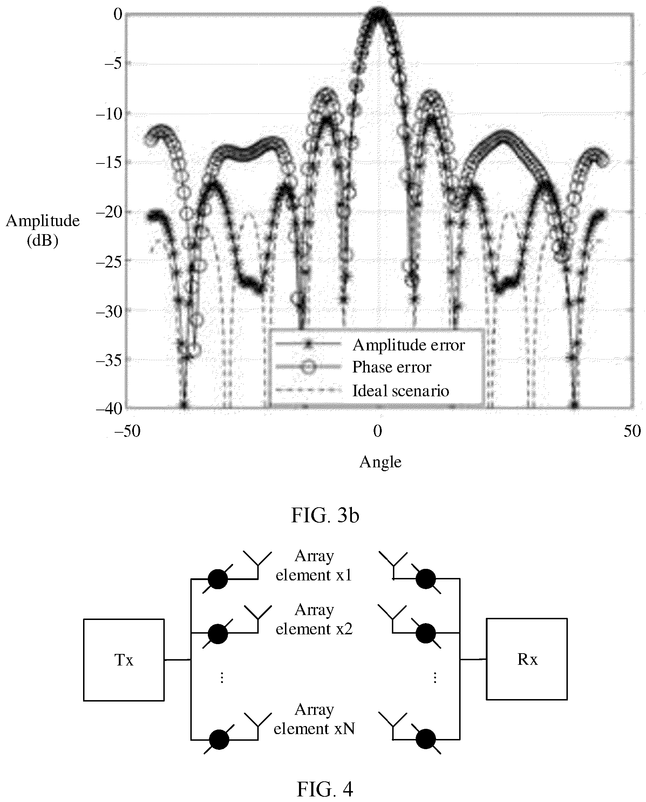

For example, as shown in FIG. 3a, a consistency error of channel array elements causes a decrease in output power and a beam direction offset. As shown in FIG. 3b, in an ideal case, maximum energy of a side lobe is -20 dB. When an amplitude error exists, the maximum energy of the side lobe increases to -10 dB. When a phase error exists, the maximum energy of the side lobe increases to about -8 dB. In other words, the consistency error of the channel array elements causes an increase in energy of the side lobe.

To meet a requirement on consistency of the channel array elements, the consistency error of the channel array elements needs to be estimated. Currently, a commonly used estimation method is a vector rotation method. The following describes the commonly used vector rotation method by using a communication scenario in which one transmit channel (Tx) and one receive channel (Rx) are shown in FIG. 4 and both the transmit channel and the receive channel include N array elements as an example. For example, a principle of the vector rotation method may be represented by using the following formula:

$$Y = MX,$$

that is,

$$\begin{bmatrix} y_1 \\ \vdots \\ y_N \end{bmatrix} = \begin{bmatrix} m_{11} & \cdots & m_{1N} \\ \vdots & \ddots & \vdots \\ m_{N1} & \cdots & m_{NN} \end{bmatrix} \begin{bmatrix} x_1 \\ \vdots \\ x_N \end{bmatrix}$$

Herein, $y_i$ represents a measurement value determined by the receive end during $i^{th}$ measurement; $x_j$ may indicate an amplitude value and a phase value of a $j^{th}$ channel array element, and the amplitude value and the phase value may be represented by a complex number; and $[m_{i1}, m_{i2}, \cdots, m_{iN}]$ represents a vector rotation vector during the $i^{th}$ measurement. Specifically, $m_{ij}$ represents a vector rotation value of the $j^{th}$ channel array element during the $i^{th}$ measurement, and the vector rotation value is used to adjust an amplitude and/or a phase of the channel array element. Herein, $i, j = 1,2, \cdots, N$. For example, N is equal to 4. A simple design of a matrix $M$ may be as follows:

$$M = \begin{bmatrix} 0 & 1 & 1 & 1 \\ 1 & 0 & 1 & 1 \\ 1 & 1 & 0 & 1 \\ 1 & 1 & 1 & 0 \end{bmatrix}$$

$Y$ is obtained by the receive end through measurement, and $M$ may be designed in advance. In other words, both $Y$ and $M$ are known quantities. Therefore, $X$ may be estimated according to the foregoing formula, to estimate a consistency error of the channel array elements.

The foregoing describes the vector rotation method based on a result. The following further describes the foregoing principle from a perspective of modeling an entire receiving and sending process.

For example, for the $i^{th}$ measurement, the measurement value $y_i$ determined by the receive end may be represented as follows:

$$y_i = \mathbf{w}_R^H \cdot \boldsymbol{\Lambda}_R^H \big( \mathbf{H}_{Space} \cdot \boldsymbol{\Lambda}_T \cdot \mathbf{w}_T \cdot \boldsymbol{m}_i + \mathbf{n} \big)$$

Herein, $\cdot$ represents vector multiplication. In other words, vector elements are multiplied in a one-to-one correspondence.

$\mathbf{H}_{Space}$ represents an air interface channel. When a steering vector of the channel array element is considered, the air interface channel may be represented as follows:

$$\mathbf{H}_{Space} = \boldsymbol{a}_{\theta_r} \oplus \boldsymbol{a}_{\theta_t}^H$$

Herein, $\boldsymbol{a}_{\theta_r}$ represents an angle of arrival (angle of arrival, AOA), and is a steering vector of the receive end; $\boldsymbol{a}_{\theta_t}$ represents an angle of depart (angle of depart, AOD), and is a steering vector of the transmit end; $\boldsymbol{a}_{\theta_r}$ and $\boldsymbol{a}_{\theta_t}$ are column vectors; $\boldsymbol{a}_{\theta_t}^H$ represents a conjugate transpose of $\boldsymbol{a}_{\theta_t}$; an $i^{th}$ element of $\boldsymbol{a}_{\theta_r}$ is represented as $a_{\theta_r,i}^*$, and a $j^{th}$ element of $\boldsymbol{a}_{\theta_t}$ is represented as $a_{\theta_t,j}$; and $\oplus$ represents a Kronecker (Kronecker) product. $\mathbf{w}_R^H$ and $\mathbf{w}_T$ respectively represent weighted vectors (or referred to as analog weights) of the receive end and the transmit end. An $i^{th}$ element of $\mathbf{w}_R^H$ is represented as $w_{R,i}^*$, and a $j^{th}$ element of $\mathbf{w}_T$ is represented as $w_{T,j}$. $\mathbf{\Lambda}_R^H$ and $\Lambda_T$ respectively represent complex numbers of consistency errors of channel array elements at the receive end and the transmit end. $\mathbf{\Lambda}_R^H$ is a row vector, and $\Lambda_T$ is a column vector. An $i^{th}$ element of $\mathbf{\Lambda}_R^H$ is represented as $\gamma_{R,i}$, and a $j^{th}$ element of $\Lambda_T$ is represented as $\gamma_{T,j}$.

Herein, $m_i$ represents a vector rotation vector during the $i^{th}$ measurement, $m_{i,j}$ represents a rotation vector value of the $j^{th}$ channel array element at the transmit end during the $i^{th}$ measurement, $m_{i,j}$ is a $j^{th}$ element of $m_i$, and $m_i$ is a known quantity.

In conclusion, during the $i^{th}$ measurement, the measurement value $y_i$ determined by the receive end may be further represented as follows:

$$y_i = \mathbf{w}_R^H \cdot \mathbf{\Lambda}_R^H \big( \mathbf{H}_{Space} \cdot \mathbf{\Lambda}_T \cdot \mathbf{w}_T \cdot \boldsymbol{m}_i + \mathbf{n} \big)$$

$$= ((\mathbf{w}_R^H \cdot \mathbf{\Lambda}_R^H) \boldsymbol{a}_{\theta_r})(\boldsymbol{a}_{\theta_t}^H (\mathbf{\Lambda}_T \cdot \mathbf{w}_T \cdot \boldsymbol{m}_i)) + \tilde{n}_i$$

$$= \left\{ \sum_{i=1}^{N} w_{R,i}^* \gamma_{R,i} a_{\theta_r,i}^* \right\} \left\{ \sum_{j=1}^{j=N} a_{\theta_t,j} \gamma_{T,j} w_{T,j,k} m_{i,j} \right\} + \tilde{n}_i$$

$$= A_0 e^{j\epsilon_0} \left\{ \sum_{j=1}^{j=N} a_{\theta_t,j} \gamma_{T,j} w_{T,j} \, m_{i,j} \right\} + \tilde{n}_i$$

$$= \sum_{j=1}^{j=N} m_{i,j} x_j + \tilde{n}_i$$

Herein,

$$x_j = \alpha_{T,j} \cdot A_0 \cdot e^{j(\tilde{\theta}_j + \varphi_{T,j} + \varphi_j + \epsilon_0)}$$

$\alpha_{T,j}$ represents amplitude information of $\gamma_{T,j}$, namely, amplitude information of the $j^{th}$ channel array element at the transmit end, and $\varphi_{T,j}$ represents phase information of $\gamma_{T,j}$, namely, phase information of the $j^{th}$ channel array element at the transmit end. $\tilde{\theta}_j$ represents phase information of $a_{\theta t,j}$, and is a known quantity. $\varphi_j$ represents phase information of $w_{T,j}$, and is a known quantity.

$A_0$ and $\varepsilon_0$ are mainly caused by consistency errors of channel array elements at the receive end. It is assumed that consistency errors between channel array elements of the air interface channel and channel array elements at a receive end and a transmit end remain unchanged during a plurality of rounds of measurement. In this case, $A_0$ and $\varepsilon_0$ may be considered as constants.

In other words, because $\tilde{\theta}_j$ and $\varphi_j$ are known quantities, and $A_0$ and $\varepsilon_0$ are constants, an amplitude ratio between $x_j$ and an amplitude ratio between $\alpha_{T,j}$ are equal, and a phase difference between $x_j$ and a phase difference between $\varphi_{T,j}$ are equal. A purpose of consistency error estimation is to obtain an amplitude ratio and a phase difference between channel array elements, so that the consistency error can be obtained through estimation according to the foregoing formulas.

In the foregoing solution, it needs to be assumed that phase discriminations (for example, phase discriminations caused by phase noise or movement) of measurement values at a plurality of measurement moments are the same. However, in an actual phased array antenna system, due to factors such as jitter of a device crystal oscillator or shift of a device location, phase discriminations of measured values at different moments are different. In addition, with an increase of a carrier frequency, a jitter amplitude of the crystal oscillator increases, which makes the phase discriminations of the measured values at different moments more obvious. A purpose of consistency error estimation is to measure the phase discrimination between channel array elements. Therefore, precision of the consistency error estimation is greatly reduced due to impact of different phase discriminations of measured values at different moments.

After the time-varying phase discriminations are considered, a consistency error estimation model may be represented as follows:

$$Y = DMX$$

*D* represents a phase discrimination matrix; *D* is a diagonal matrix; and values on a diagonal represent phase discriminations at different moments. *D* is an unknown quantity.

Based on the consistency error estimation model, it can be learned that a possible manner of reducing the impact of the phase discriminations on consistency error estimation is to compensate for the phase discriminations at different measurement moments. In other words, the phase discriminations need to be estimated, to estimate the phase discrimination matrix *D* and perform phase discrimination compensation.

Based on this, this application provides a channel measurement method, to estimate a phase discrimination of channel measurement quantities of N first antenna ports based on a channel measurement quantity corresponding to a second antenna port, so that phase compensation can be performed on the channel measurement quantities of the N first antenna ports based on the phase discrimination, thereby improving precision of the channel measurement quantities of the first antenna ports, reducing impact of the phase discrimination on the consistency error estimation, and improving precision of the consistency error estimation.

With reference to the accompanying drawings, the following describes in detail the method provided in embodiments of this application by using interaction between a terminal device and a network device as an example.

It may be understood that, in embodiments of this application, the terminal device or the network device may perform some or all of the steps in embodiments of this application. These steps or operations are merely examples. In embodiments of this application, other operations or variations of various operations may be further performed. In addition, the steps may be performed in different sequences presented in embodiments of this application, and not all the operations in embodiments of this application may need to be performed.

It should be noted that names of information between devices, names of parameters in the information, or the like in the following embodiments of this application are merely examples, and may be other names in a specific implementation. This is not specifically limited in embodiments of this application.

For example, the method provided in the following embodiments of this application may be applied to various processes of time-based measurement and joint calculation, for example, may be applied to a consistency error estimation scenario. Certainly, the application scenario of this application is described herein merely as an example. The application scenario does not constitute any limitation on this application. An application scenario of the method provided below is not specifically limited in this application either. For example, the method may be further applied in another scenario related to time-based measurement and joint calculation.

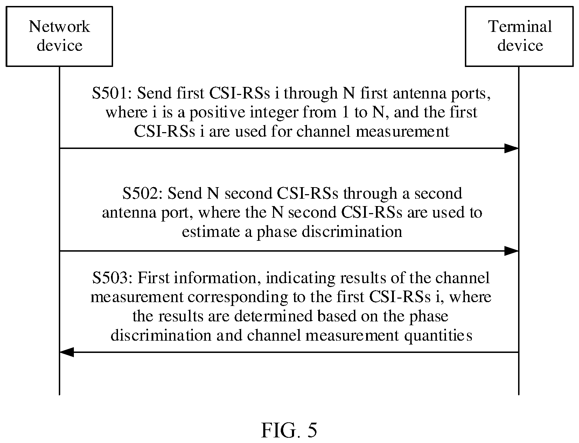

FIG. 5 shows a channel measurement method according to an embodiment of this application. The channel measurement method includes the following steps.

S501: A network device sends first channel state information-reference signals (channel state information-reference signal, CSI-RS) i to a terminal device through N first antenna ports. Correspondingly, the terminal device receives the first CSI-RSs i from the N antenna ports of the network device.

Herein, i is a positive integer from 1 to N, and N is a positive integer greater than 1. To be specific, that the network device sends the first CSI-RSs i to the terminal device through the N first antenna ports may be understood as follows: The network device sends a first CSI-RS 1 through a first antenna port 1, sends a first CSI-RS 2 through a first antenna port 2, sends a first CSI-RS 3 through a first antenna port 3, ..., and sends a first CSI-RS N through a first antenna port N.

Optionally, the N first antenna ports are different from each other. Therefore, the first CSI-RS 1 to the first CSI-RS N are different from each other. Time domain positions of the N first CSI-RSs sent by the network device through the N first antenna ports are different. In other words, the network device respectively sends the first CSI-RS 1 to the first CSI-RS N at N measurement moments.

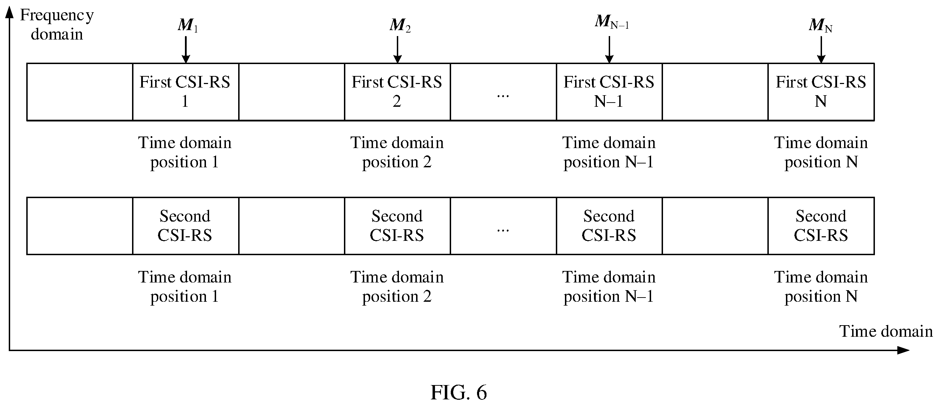

For example, as shown in FIG. 6, the network device may send the first CSI-RS 1 at a time domain position 1, send the first CSI-RS 2 at a time domain position 2, ..., send the first CSI-RS N-1 at a time domain position N-1, and send the first CSI-RS N at a time domain position N.

The first CSI-RSs i are used for channel measurement. Optionally, in a consistency error estimation scenario, a channel measurement quantity corresponding to the first CSI-RSs i may be used for consistency error estimation.

Optionally, when sending the first CSI-RS i, the network device may adjust an amplitude and/or a vector of the first CSI-RS i by using a vector rotation vector $M_i$. Vector rotation vectors corresponding to the first CSI-RS 1 to the first CSI-RS N are different from each other. For example, as shown in FIG. 6, a vector rotation vector corresponding to the first CSI-RS 1 is $M_1$, and a vector rotation vector corresponding to the first CSI-RS 2 is $M_2$. By analogy, a vector rotation vector corresponding to the first CSI-RS N-1 is $M_{N-1}$, and a vector rotation vector corresponding to the first CSI-RS N is $M_N$.

Optionally, the vector rotation vectors corresponding to the first CSI-RS 1 to the first CSI-RS N may form a vector rotation matrix. Each vector rotation vector or the vector rotation matrix may be designed in advance or defined in a protocol. This is not specifically limited in this application.

Optionally, the N first antenna ports are antenna ports corresponding to a first channel. The first channel may be any transmit channel of a transmit end (namely, the network device).

Optionally, the terminal device may perform channel measurement based on the received first CSI-RSs i, to obtain measurement quantities $y_i^A$ of the channel measurement corresponding to the first CSI-RSs i. The superscript A indicates that the measurement quantity is a measurement quantity corresponding to the first antenna port (or the first CSI-RS). Measurement quantities corresponding to the first CSI-RS 1 to the first CSI-RS N may be represented as

$$\boldsymbol{Y}^A = [y_1^A \quad y_2^A \quad \cdots \quad y_N^A].$$

Optionally, the measurement quantity of the channel measurement (or referred to as a channel measurement quantity) may be understood as a channel estimation value, and may include phase information of a channel and further include amplitude information of the channel.

S502: The network device sends N second CSI-RSs to the terminal device through a second antenna port. Correspondingly, the terminal device receives the N second CSI-RSs from the second antenna port of the network device.

In other words, the network device sends a second CSI-RS to the terminal device N times through a same antenna port (namely, the second antenna port).

The N second CSI-RSs are used to estimate a phase discrimination. For example, the phase discrimination may be a phase discrimination of channel measurement quantities of the N first antenna ports. In other words, in this embodiment of this application, the phase discrimination of the channel measurement quantities of the N first antenna ports may be estimated by using the CSI-RSs sent through the second antenna port.

Optionally, time domain positions of the N second CSI-RSs sent by the network device through the second antenna port are different. In other words, the network device respectively sends the second CSI-RSs at the N measurement moments.

Optionally, the first CSI-RS i and an ith second CSI-RS may satisfy at least one of the following (1) and (2):

(1) A time domain position of the first CSI-RS i is the same as a time domain position of the ith second CSI-RS. To be specific, as shown in FIG. 6, a time domain position of the first CSI-RS 1 is the same as that of a 1st second CSI-RS, and a time domain position of the first CSI-RS 2 is the same as that of a 2nd second CSI-RS. By analogy, a time domain position of the first CSI-RS N-1 is the same as that of an (N-1)th second CSI-RS, and a time domain position of the first CSI-RS N is the same as that of an Nth second CSI-RS.

(2) A frequency domain position of the first CSI-RS i is different from a frequency domain position of the ith second CSI-RS. To be specific, as shown in FIG. 6, a frequency domain position of the first CSI-RS 1 is different from that of a 1st second CSI-RS, and a frequency domain position of the first CSI-RS 2 is different from that of a 2nd second CSI-RS. By analogy, a frequency domain position of the first CSI-RS N-1 is different from that of an (N-1)th second CSI-RS, and a frequency domain position of the first CSI-RS N is different from that of an Nth second CSI-RS.

Optionally, when sending the second CSI-RS, the network device may adjust an amplitude and/or a vector of the ith second CSI-RS by using a vector rotation vector $\boldsymbol{C}_i$. Vector rotation vectors corresponding to the N second CSI-RSs are the same. When the vector rotation vectors corresponding to the N second CSI-RSs are the same, it may be considered that a change of channel measurement quantities corresponding to the N second CSI-RSs is caused only by a phase discrimination, so that the phase discrimination can be estimated by using the N second CSI-RSs.

Optionally, the vector rotation vectors corresponding to the N second CSI-RSs may form a vector rotation matrix. For example, the vector rotation matrix corresponding to the second antenna port may be an all-ones matrix.

Optionally, the second antenna port is an antenna port corresponding to a second channel. The second channel is a transmit channel that is of a transmit end (namely, the network device) and that has a same source as the first channel. For example, that the second channel and the first channel have a same source may be understood as follows: The second channel and the first channel share a local oscillator, a reference clock, and the like.

Optionally, it is assumed that a phase change value of the first channel at a moment t2 relative to a moment t1 is $\theta_1$, and a phase change value of the second channel at the moment t2 relative to the moment t1 is $\theta_2$. In this case, when the second channel and the first channel have a same source, $\theta_1 = \theta_2$. Therefore, according to the same-source feature of the channels, a phase discrimination of the first channel (namely, the phase discrimination of the channel measurement quantities of the N first antenna ports) may be estimated based on the second CSI-RSs corresponding to the second channel.

Optionally, the network device may group Q channels of the network device into P groups based on a same-source status of the channels. Every two channels in each channel group have a same source. For example, numbers (or indexes) of channels in a pth group may be from $q_{p-1} + 1$ to $q_p$. To be specific, after the Q channels are grouped into the P groups, a number of each group and a number of a channel in each group may be as follows:

$$[1 \quad 2 \quad \cdots \quad Q] = [1, 2, \ldots, q_1, q_1 + 1 \ldots q_2, \ldots, q_{P-1}, q_{P-1} + 1 \ldots, q_P]$$

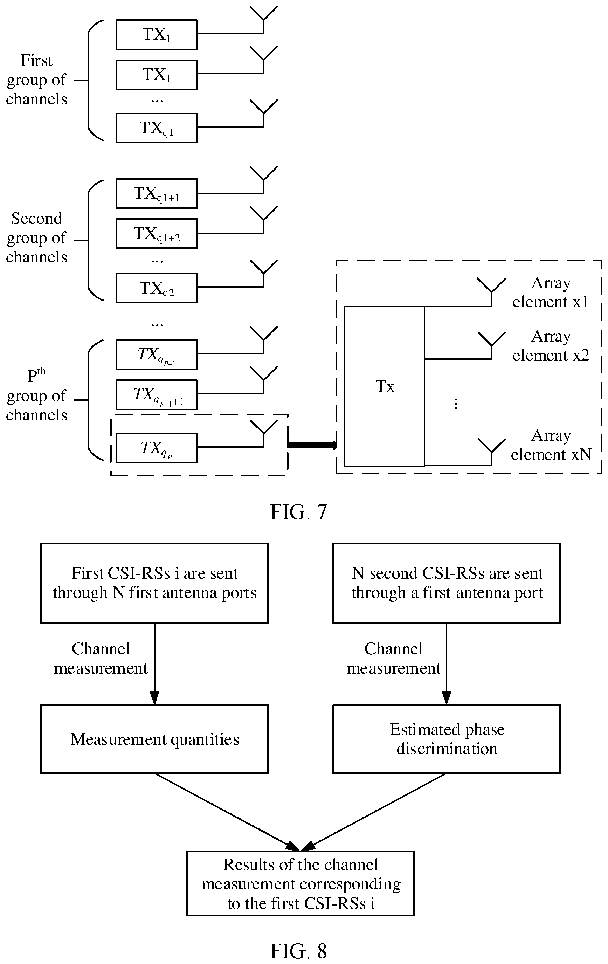

Herein, $q_0 = 0$, $q_P = Q$. In this case, grouping of the Q channels may be shown in FIG. 7. The first channel and the second channel may be two channels in any channel group.

Optionally, in this embodiment of this application, the "first channel" may also be referred to as a "to-be-measured channel", and the "second channel" may also be referred to as an "auxiliary channel". Certainly, the first channel and the second channel may have other names. This is not specifically limited in this application.

Optionally, the terminal device may perform channel measurement based on the received N second CSI-RSs, to obtain a channel measurement quantity $y_i^B$ corresponding to the ith second CSI-RS. The superscript B indicates that the measurement quantity is a measurement quantity corresponding to the second antenna port (or the second CSI-RS). Channel measurement quantities corresponding to the N second CSI-RSs may be represented as

$$\boldsymbol{Y}^B = [y_1^B \quad y_2^B \quad \cdots \quad y_N^B].$$

Optionally, when there is another channel (for example, a third channel) in the channel group to which the first channel belongs in addition to the second channel, the network device may further send N third CSI-RSs through a third antenna port corresponding to the third channel. The N third CSI-RSs are also used to estimate a phase discrimination. Correspondingly, the terminal device may receive the N third CSI-RSs, and perform channel measurement to obtain channel measurement quantities corresponding to the N third CSI-RSs. For specific implementation, refer to related descriptions of the second CSI-RS.

Optionally, before the foregoing steps S501 and S502, the network device may send configuration information to the terminal device. The configuration information may be used to configure the CSI-RS, for example, include index information and location information of the first CSI-RS i and index information and location information of the second CSI-RS. Further, the configuration information may be further used to configure a value of N and the like. After receiving the configuration information, the terminal device may receive the first CSI-RS i and the N second CSI-RSs based on the configuration information, and determine corresponding channel measurement quantities based on the CSI-RSs.

S503: The terminal device sends first information to the network device. Correspondingly, the network device receives the first information from the terminal device. The first information indicates results of the channel measurement corresponding to the first CSI-RSs i.

The results of the channel measurement may be determined based on the phase discrimination and the measurement quantities of the channel measurement corresponding to the first CSI-RSs i. The phase discrimination is obtained based on some or all of the N second CSI-RSs.

Optionally, the result of the channel measurement corresponding to the first CSI-RS i may alternatively be understood as a channel measurement quantity obtained after phase compensation is performed based on the phase discrimination.

In a possible implementation, the first information may include the phase discrimination and the measurement quantities of the channel measurement corresponding to the first CSI-RSs i. Optionally, in this scenario, the network device may determine, based on the phase discrimination and the measurement quantities, the results of the channel measurement corresponding to the first CSI-RSs i, and the terminal device does not need to calculate the results of the channel measurement. This reduces implementation complexity and power consumption of the terminal device.

In another possible implementation, the first information may include the phase discrimination and a value obtained based on the measurement quantities of the channel measurement corresponding to the first CSI-RSs i. For example, the terminal device may perform processing such as noise reduction on the measurement quantity of the channel measurement, and then send the first information carrying a processed measurement quantity to the network device. The network device may determine, based on the phase discrimination and the value obtained based on the measurement quantities of the channel measurement, the results of the channel measurement corresponding to the first CSI-RSs i, and the terminal device does not need to calculate the results of the channel measurement.

In still another possible implementation, the first information may include the results of the channel measurement corresponding to the first CSI-RSs i. In other words, the terminal device feeds back, to the network device, the channel measurement quantities obtained after phase compensation. Based on this implementation, an amount of information reported by the terminal device can be reduced, thereby reducing resource overheads.

Optionally, a specific parameter included in the first information may be preconfigured by the network device, or may be determined by the terminal device. This is not specifically limited in this application.

Optionally, the first information may be carried in a physical uplink shared channel (physical uplink shared channel, PUSCH), or the first information may be carried in uplink control information (uplink control information, UCI).

Optionally, before step S503, the network device may send second information to the terminal device. Correspondingly, the terminal device receives the second information from the network device. The second information may be carried in the configuration information used to configure the CSI-RS, or may not be carried in the configuration information. This is not specifically limited in this application.

The second information indicates the terminal device to estimate, based on the channel measurement quantities corresponding to the second antenna port, the phase discrimination of the channel measurement quantities of the N first antenna ports. Alternatively, the second information indicates the terminal device to determine, based on the channel measurement quantities corresponding to the second antenna port, the results of the channel measurement corresponding to the N first antenna ports. Alternatively, the second information indicates that the channel measurement quantities corresponding to the second antenna port are used to estimate the phase discrimination of the channel measurement quantities corresponding to the N first antenna ports. Alternatively, the second information indicates that the N first antenna ports are used for channel measurement, and the second antenna port is used for phase discrimination estimation.

It should be noted that the phase discrimination design in this embodiment of this application is merely an application form of channel measurement of the second antenna port, and there may alternatively be another form. In general, measurement of the reference signals on the second antenna port (or channel measurement of the second antenna port) is used for channel measurement of the first antenna port. In other words, in this application, the channel measurement of the second antenna port is not only used to estimate the phase discrimination of the first antenna port, and another estimation quantity obtained based on the channel measurement of the second antenna port may further be used for channel measurement of the first antenna port.

Optionally, a channel measurement quantity corresponding to an antenna port may be understood as a channel measurement quantity corresponding to a CSI-RS sent through the antenna port. The results of the channel measurement corresponding to the N first antenna ports may be understood as results of the channel measurement corresponding to the first CSI-RSs i sent through the N first antenna ports.

In a possible implementation, the second information may include indexes of the N first antenna ports and an index of the second antenna port. For example, the index of the second antenna port may be carried in configuration information of the N first antenna ports. Alternatively, the second information may include an index of the first CSI-RS i and an index of the second CSI-RS. For example, the index of the second CSI-RS may be carried in configuration information of the first CSI-RS i.

In an example, the index of the second CSI-RS may be located in a specific field in the configuration information of the first CSI-RS i. The specific field may indicate a CSI-RS used for the channel measurement corresponding to the first CSI-RSs i, or indicate an antenna port used for the channel measurement of the first antenna port. Therefore, when the specific field carries the index of the second CSI-RS, it may indicate that the channel measurement corresponding to the second CSI-RS may be used for the channel measurement corresponding to the first CSI-RSs i, or it may indicate that the channel measurement of the second antenna port is used for the channel measurement of the first antenna port.

In another example, the configuration information of the first CSI-RS i may further carry a purpose of the second CSI-RS. For example, the configuration information further indicates that the channel measurement corresponding to the second CSI-RS is used for the channel measurement corresponding to the first CSI-RSs i, or further indicates that the channel measurement of the second antenna port is used for the channel measurement of the first antenna port.

In another possible implementation, the second information may include an index of the first channel and an index of the second channel. For example, the index of the second channel may be carried in configuration information of the first channel. After receiving the indexes of the channels, the terminal device may determine the N first antenna ports and the second antenna port based on a correspondence between the channels and the antenna ports.

In still another possible implementation, the second information may include an index of the first channel and channel grouping information, and the channel grouping information indicates a channel grouping status, for example, indicates a channel included in a channel group. After receiving the second information, the terminal device may determine, based on the index of the first channel, a channel group to which the first channel belongs, to determine a channel in the channel group other than the first channel as an auxiliary channel. Correspondingly, the network device sends, through an antenna port corresponding to the channel other than the first channel in the channel group, a CSI-RS used for phase discrimination estimation.

Optionally, the second information may be carried in a radio resource control (radio resource control, RRC) message, downlink control information (downlink control information, DCI), or a media access control-control element (media access control-control element, MAC-CE). Certainly, the second information may alternatively be carried in another message. For example, the second information may alternatively be carried in system information, for example, a system information block (system information block, SIB). This is not specifically limited in this application.

Optionally, before step S503, the terminal device may determine the phase discrimination based on M channel measurement quantities corresponding to M second CSI-RSs. M is a positive integer less than or equal to N. In other words, the terminal device may determine the phase discrimination based on channel measurement quantities corresponding to the some or all of the N second CSI-RSs. A channel measurement quantity corresponding to a CSI-RS may be understood as a channel measurement quantity obtained based on the CSI-RS. For example, the terminal device may determine the phase discrimination based on an indication of the second information.

Optionally, the M second CSI-RSs may be the first M second CSI-RSs with highest signal quality in the N second CSI-RSs. The signal quality may be represented by reference signal received power (reference signal received power, RSRP), reference signal received quality (reference signal received quality, RSRQ), or the like.

Optionally, the phase discrimination may include M elements, and the M elements are located on a main diagonal of a phase discrimination matrix. The phase discrimination matrix is a diagonal matrix.

In a possible implementation, the terminal device may determine a $j^{th}$ element of the phase discrimination based on a channel measurement quantity corresponding to a $j^{th}$ second CSI-RS in the M second CSI-RSs. Herein, j is a positive integer from 1 to M. To be specific, the terminal device may determine a $1^{st}$ element of the phase discrimination based on a channel measurement quantity corresponding to a $1^{st}$ second CSI-RS, determine a $2^{nd}$ element of the phase discrimination based on a channel measurement quantity corresponding to a $2^{nd}$ second CSI-RS, and by analogy, determine an $M^{th}$ element of the phase discrimination based on a channel measurement quantity corresponding to an $M^{th}$ second CSI-RS.

For example, M is equal to N. The phase discrimination and the channel measurement quantities corresponding to the N second CSI-RSs may satisfy the following relationship:

$$\Delta\theta = angle([y_1^B \ y_2^B \ y_3^B \ \cdots y_N^B])$$

Herein, $\Delta\theta$ is the phase discrimination, *angle* is used to solve a phase angle, and $y_j^B$ represents the channel measurement quantity corresponding to the $j^{th}$ second CSI-RS.

In another possible implementation, the terminal device may determine a $j^{th}$ element of the phase discrimination based on a channel measurement quantity corresponding to a $j^{th}$ second CSI-RS in the M second CSI-RSs and a first value. Herein, j is a positive integer from 1 to M. To be specific, the terminal device may determine a $1^{st}$ element of the phase discrimination based on a channel measurement quantity corresponding to a $1^{st}$ second CSI-RS and the first value, determine a $2^{nd}$ element of the phase discrimination based on a channel measurement quantity corresponding to a $2^{nd}$ second CSI-RS and the first value, and by analogy, determine an $M^{th}$ element of the phase discrimination based on a channel measurement quantity corresponding to an $M^{th}$ second CSI-RS and the first value.

Optionally, the first value may be a channel measurement quantity corresponding to one second CSI-RS in the M second CSI-RSs. In other words, the first value is a channel measurement quantity corresponding to an $m^{th}$ second CSI-RS, and m is a positive integer from 1 to M. Alternatively, the first value may be a preset value. For example, a value of the first value may be equal to 1. Certainly, the value of the first value may alternatively be another value. This is not specifically limited in this application.

For example, M is equal to N. The phase discrimination and the channel measurement quantities corresponding to the N second CSI-RSs may satisfy the following relationship:

$$\Delta\theta = angle\left(\left[\frac{y_1^B}{C} \ \frac{y_2^B}{C} \ \frac{y_3^B}{C} \ \cdots \ \frac{y_N^B}{C}\right]\right)$$

Herein, $\Delta\theta$ is the phase discrimination, *angle* is used to solve a phase angle, $y_j^B$ represents the channel measurement quantity corresponding to the $j^{th}$ second CSI-RS, and C represents the first value.

Optionally, when the network device further sends N third CSI-RSs through a third antenna port, the terminal device may determine the phase discrimination based on channel measurement quantities corresponding to M third CSI-RSs. Then, a final phase discrimination is obtained by using the phase discrimination determined based on the channel measurement quantities corresponding to the M second CSI-RSs and the phase discrimination determined based on the channel measurement quantities corresponding to the M third CSI-RSs. For example, an average value, a maximum value, or a minimum value of the two values is obtained, to obtain the final phase discrimination.

Optionally, a relationship between the phase discrimination and the phase discrimination matrix may be represented as follows:

$$\boldsymbol{D} = diag(\Delta\theta)$$

Herein, *diag* is used to construct the diagonal matrix.

Optionally, after determining the phase discrimination, the terminal device may determine, based on the phase discrimination and the measurement quantities of the channel measurement corresponding to the first CSI-RSs i, the results of the channel measurement corresponding to the first CSI-RSs i.

Optionally, the results of the channel measurement corresponding to the first CSI-RSs i, the phase discrimination, and the measurement quantities of the channel measurement corresponding to the first CSI-RSs i may satisfy the following Formula (1):

$$Y^A_{comp} = [\exp(\boldsymbol{D})]^{-1} * \boldsymbol{Y}^A \quad (1)$$

Herein, $Y^A_{comp}$ represents a result of the channel measurement. $\boldsymbol{D}$ represents the phase discrimination matrix. An element in the phase discrimination $\Delta\theta$ is located on the main diagonal of the phase discrimination matrix, and the phase discrimination matrix and the phase discrimination satisfy: $\boldsymbol{D} = diag(\Delta\theta)$. $\boldsymbol{Y}^A$ represents a measurement quantity of the channel measurement.

Optionally, in a possible implementation, $\boldsymbol{Y}^A$ may alternatively be a value obtained based on $\boldsymbol{Y}^A$. For example, the terminal device may perform processing such as noise reduction on $\boldsymbol{Y}^A$, and determine the result of the channel measurement by using a processing result.

Herein, exp represents an exponential function with a natural constant e as a base, exp($\boldsymbol{D}$) represents that each element in the phase discrimination matrix $\boldsymbol{D}$ is transformed into an exponential form with e as a base, exp($\boldsymbol{D}$) is denoted as $\hat{\boldsymbol{D}}$, and $[\hat{\boldsymbol{D}}]^{-1}$ represents an inverse matrix of the matrix $\hat{\boldsymbol{D}}$.

Optionally, because the phase discrimination matrix is a diagonal matrix, $[\exp(\boldsymbol{D})]^{-1} = \exp(-\boldsymbol{D})$, and the foregoing Formula (1) may alternatively be described in a form of the following Formula (2):

$$Y^A_{comp} = \exp(-\boldsymbol{D}) * \boldsymbol{Y}^A \quad (2)$$

Optionally, because the phase discrimination includes a plurality of elements, the phase discrimination $\Delta\theta$ may be represented in a form of row vector. To be specific, $\Delta\theta = [\Delta\theta_1 \, \Delta\theta_1 \, ... \, \Delta\theta_N]$. Herein, $\Delta\theta_n$ represents an $n^{th}$ element of the phase discrimination $\Delta\theta$. When the measurement quantity $\boldsymbol{Y}^A$ of the channel measurement and the result $Y^A_{comp}$ of the channel measurement are represented in a form of the following column vector:

$$\boldsymbol{Y}^A = \begin{bmatrix} y^A_1 \\ y^A_2 \\ \vdots \\ y^A_N \end{bmatrix}$$

$$Y^A_{comp} = \begin{bmatrix} y^A_{comp1} \\ y^A_{comp2} \\ \vdots \\ y^A_{compN} \end{bmatrix}$$

Herein, $y^A_n$ represents an $n^{th}$ element of the channel measurement quantity, and $y^A_{compn}$ represents an $n^{th}$ element of the channel measurement result. In this case, the foregoing Formula (1) may alternatively be described in a form of the following Formula (3), Formula (4), or Formula (5):

$$y^A_{compn} = [\exp(\Delta\theta_n)]^{-1} * y^A_n \quad (3)$$

$$y^A_{compn} = \exp(-\Delta\theta_n) * y^A_n \quad (4)$$

$$y^A_{compn} = \frac{1}{\exp(\Delta\theta_n)} * y^A_n \quad (5)$$

It should be noted that the foregoing Formula (1) to Formula (5) are merely examples for describing a relationship satisfied by the results of the channel measurement corresponding to the first CSI-RSs i, the phase discrimination, and the measurement quantities of the channel measurement corresponding to the first CSI-RSs i. The first CSI-RS i, the phase discrimination, and the measurement quantities of the channel measurement corresponding to the first CSI-RSs i may alternatively satisfy another relationship. For example, a coefficient may be multiplied on the right of the equal sign in the foregoing Formula (1) to Formula (5). This is not specifically limited in this application.

Optionally, in a consistency error estimation scenario, after obtaining the results of the channel measurement corresponding to the first CSI-RSs i, the network device may perform consistency error estimation.

For example, when a consistency error estimation model is $Y = DMX$, it is assumed that $Y^A = \hat{D}MX$, and then:

$$Y^A_{comp} = \left[\hat{D}\right]^{-1} * Y^A = \widehat{\left[\hat{D}\right]^{-1}}DMX = MX$$

Therefore,

$$X = M^{-1} * Y^A_{comp}$$

Herein, $M^{-1}$ represents an inverse matrix of a matrix $M$. Because M is a known quantity, $M^{-1}$ is a known quantity. Further, $Y^A_{comp}$ may be obtained based on the procedure shown in FIG. 5. Therefore, the network device may estimate $X$, to estimate a consistency error of channel array elements of the first channel. Further, after obtaining the consistency error, the network device may compensate for the consistency error of the channel array elements.

It should be noted that the foregoing uses only an example in which the results of the channel measurement corresponding to the first CSI-RSs i are used for consistency error estimation for description. Certainly, the channel measurement results may alternatively be used for another purpose, and the network device may flexibly use the channel measurement results according to an actual requirement. This is not specifically limited in this application.

In conclusion, in the solution provided in this application, as shown in FIG. 8, the network device sends the N second CSI-RSs through the second antenna port for measurement to estimate the phase discrimination, and sends the first CSI-RS i through the N first antenna ports for channel measurement. A channel measurement quantity corresponding to the first antenna port is compensated by using the estimated phase discrimination, to obtain a result of the channel measurement corresponding to the first antenna port, namely, a channel measurement quantity obtained after compensation. Because the phase discrimination is considered in the results of the channel measurement corresponding to the first CSI-RSs i, precision of the results of the channel measurement corresponding to the first CSI-RSs i can be improved.

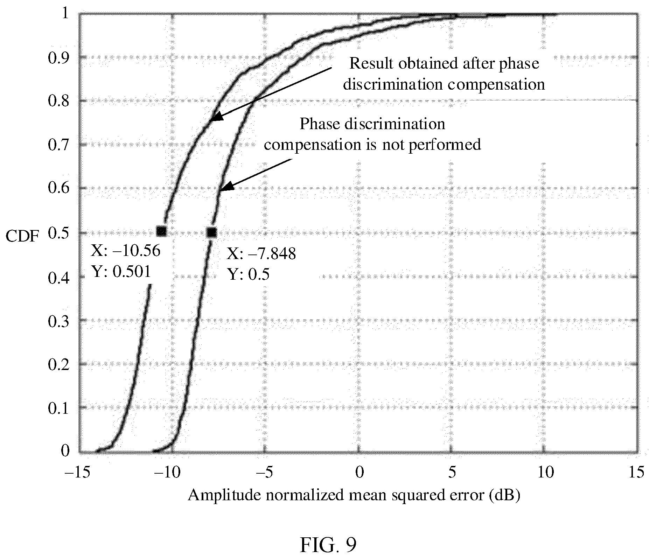

Further, in the consistency error estimation scenario, impact of the phase discrimination on the consistency error estimation can be reduced, thereby improving precision of the consistency error estimation. For example, as shown in a cumulative distribution function (cumulative distribution function, CDF) diagram shown in FIG. 9, in a scenario in which a signal-to-noise ratio (signal-to-noise ratio, SNR) is 30 decibels (dB), compared with that in a solution in which phase discrimination compensation is not performed, in the solution in this application, precision of consistency error estimation (an amplitude (amplitude) normalized mean square error (normalized mean squared error, NMSE) shown in FIG. 9) can be improved by a maximum of nearly 3 dB. In a high signal-to-noise ratio (for example, a signal-to-noise ratio is 40 dB or 50 dB) scenario, estimation precision in the solution of this application can be improved by more than 5 dB.

In addition, in the solution of this application, no additional hardware needs to be added, and the phase discrimination can be estimated by using an antenna port corresponding to an existing channel of the transmit end. Therefore, complexity is low, and application costs can be reduced.

In some embodiments, the network device may repeatedly send some first CSI-RSs. For example, the network device may repeatedly send a first CSI-RS I to the terminal device K times through a first antenna port I. I is a positive integer from 1 to N, and K is a positive integer. Correspondingly, the terminal device repeatedly receives the first CSI-RS I K times through the first antenna port I.

Optionally, in this scenario, a channel measurement quantity corresponding to the first CSI-RS I is an average value, a maximum value, or a minimum value of channel measurement quantities corresponding to the first CSI-RS I repeatedly received K times.

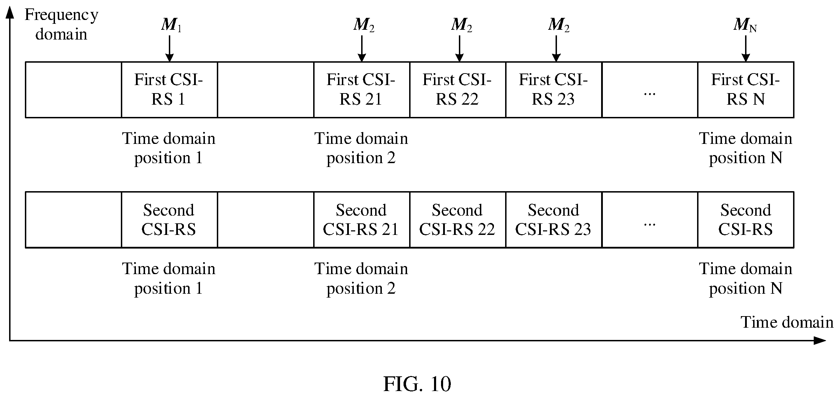

For example, I is equal to 2, and K is equal to 3. As shown in FIG. 10, the network device repeatedly sends a first CSI-RS 2 three times, and the first CSI-RS 2 is denoted as a first CSI-RS 21, a first CSI-RS 22, and a first CSI-RS 23. In this case, a channel measurement quantity $y^A_2$ corresponding to the first CSI-RS 2 may be an average value, a maximum value, or a minimum value of a channel measurement quantity $y^A_{21}$ corresponding to the first CSI-RS 21, a channel measurement quantity $y^A_{22}$ corresponding to the first CSI-RS 22, and a channel measurement quantity $y^A_{23}$ corresponding to the first CSI-RS 23.

Optionally, when the network device repeatedly sends the first CSI-RS I K times, the network device may further send an $I^{th}$ second CSI-RS to the terminal device K times through the second antenna port.

Optionally, in this scenario, a channel measurement quantity corresponding to the $I^{th}$ second CSI-RS may be an average value, a maximum value, or a minimum value of channel measurement quantities corresponding to the I$^{th}$ second CSI-RS repeatedly received K times.

For example, I is equal to 2, and K is equal to 3. As shown in FIG. 10, the network device repeatedly sends a 2$^{nd}$ second CSI-RS three times. In other words, the network device actually sends N+K-1 second CSI-RSs through the second antenna port. In this case, a channel measurement quantity $y_2^B$ corresponding to the 2$^{nd}$ second CSI-RS may be an average value, a maximum value, or a minimum value of a channel measurement quantity $y_{21}^B$ corresponding to a second CSI-RS 21, a channel measurement quantity $y_{22}^B$ corresponding to a second CSI-RS 22, and a channel measurement quantity $y_{23}^B$ corresponding to a second CSI-RS 23.

Based on repeated sending of the first CSI-RS and the I$^{th}$ second CSI-RS, the terminal device can determine channel measurement quantities based on the CSI-RS repeatedly received a plurality of times, and perform noise reduction on a channel measurement quantity obtained through a single time of receiving, to improve precision of the channel measurement quantity.

Optionally, the network device may send third information to the terminal device. Correspondingly, the terminal device receives the third information from the network device. The third information indicates a repetition quantity K of the first CSI-RS I. For example, the third information may be carried in information used to configure the first CSI-RS I.

In a possible implementation, the third information may include an index of the first CSI-RS I and the repetition quantity K, or the third information may include an index of the first antenna port I for sending the first CSI-RS I and the repetition quantity K.

In another possible implementation, the third information may include the repetition quantity K. In this scenario, each first CSI-RS i is repeatedly sent K times by default.

In still another possible implementation, the third information may include an index I and the repetition quantity K, indicating that the I$^{th}$ first CSI-RS (namely, the first CSI-RS I) is repeated K times, or indicating that the I$^{th}$ first CSI-RS to an (I+K-1)$^{th}$ first CSI-RS are the same CSI-RSs.

Optionally, the procedure shown in FIG. 5 may be understood as a measurement process of obtaining a phase discrimination and a channel measurement result. In addition, the network device and the terminal device perform a plurality of rounds of measurement, and obtain a phase discrimination and a channel measurement result in each round of measurement.

In a possible implementation, in a scenario in which a plurality of rounds of measurement are performed, the terminal device may send the first information to the network device based on a reporting period. In other words, the terminal device periodically indicates channel measurement results to the network device. For example, if a plurality of rounds of measurement are performed in one reporting period, the terminal device may indicate, to the network device, a channel measurement result of a last round of measurement in the reporting period. Alternatively, the terminal device may determine a final channel measurement result based on channel measurement results of the plurality of rounds of measurement, and indicate the final channel measurement result to the network device.

Optionally, the reporting period may be configured by the network device. For example, the network device may configure the reporting period in a CSI-RS measurement configuration. Alternatively, the reporting period may be customized by the terminal device, or may be predefined in a protocol. This is not specifically limited in this application.

In another possible implementation, in a scenario in which a plurality of rounds of measurement are performed, the terminal device may indicate a channel measurement result to the network device based on triggering of an event. In other words, when a trigger event occurs, the terminal device indicates the channel measurement result to the network device. The trigger event may be, for example, that the phase discrimination is greater than a first threshold, or the channel measurement quantity corresponding to the first antenna port is greater than a second threshold.

Optionally, the trigger event, the first threshold, and the second threshold may be configured by the network device, or may be customized by the terminal device, or may be predefined in a protocol. This is not specifically limited in this application.

Optionally, before step S501, the network device may perform consistency error estimation based on a measurement feedback result of the terminal device, and perform the method shown in FIG. 5 when the estimated consistency error is greater than a threshold. Alternatively, the network device may perform the method shown in FIG. 5 when there is a special requirement, for example, when the network device needs to learn a more precise channel measurement result. In other words, performing of the method shown in FIG. 5 may be triggered when the consistency error is greater than the threshold, or may be triggered according to the special requirement of the network device. Certainly, performing of the method may alternatively be triggered by another event. This is not specifically limited in this application.

It should be noted that, in the foregoing embodiments of this application, only an example in which the reference signal is a CSI-RS is used for description. A form of the reference signal is not limited in this application. For example, the CSI-RS may alternatively be a reference signal of another type.

It may be understood that, in the foregoing embodiments, the methods and/or the steps implemented by the network device may alternatively be implemented by a component (for example, a processor, a chip, a chip system, a circuit, a logical module, or software, for example, a chip or a circuit) that can be used in the network device, and the methods and/or the steps implemented by the terminal device may alternatively be implemented by a component (for example, a processor, a chip, a chip system, a circuit, a logical module, or software, for example, a chip or a circuit) that can be used in the terminal device.

The foregoing mainly describes the solution provided in this application. Correspondingly, this application further provides a communication apparatus. The communication apparatus is configured to implement the foregoing methods. The communication apparatus may be the network device in the foregoing method embodiments, an apparatus including the network device, or a component that can be used in the network device, for example, a chip or a chip system. Alternatively, the communication apparatus may be the terminal device in the foregoing method embodiments, an apparatus including the foregoing terminal device, or a component that can be used in the terminal device, for example, a chip or a chip system.

It may be understood that, to implement the foregoing functions, the communication apparatus includes a hardware structure and/or a software module for performing a corresponding function. A person skilled in the art should easily be aware that, in combination with units and algorithm steps of the examples described in embodiments disclosed in this specification, this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, each functional module may be obtained through division based on each corresponding function, or two or more functions may be integrated into one processing module. The integrated module may be implemented in a form of hardware, or may be implemented in a form of software functional module. It should be noted that, in embodiments of this application, division into the modules is an example, and is merely logical function division. During actual implementation, another division manner may be used.

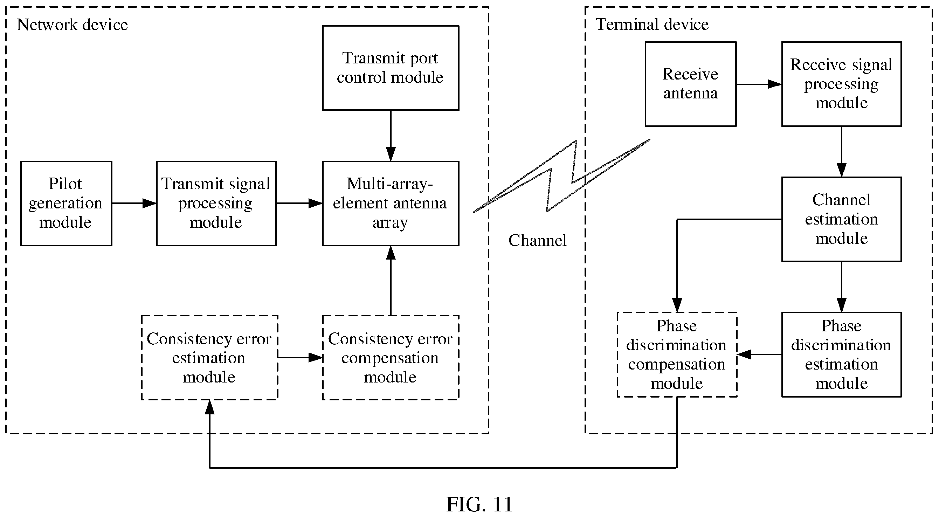

FIG. 11 is a diagram of a structure of a network device and a terminal device according to an embodiment of this application. Refer to FIG. 11. The network device may include a pilot generation module, a transmit signal processing module, a transmit port control module, and a multi-array element antenna array. Further, the network device may further include a consistency error estimation module and a consistency error compensation module.

Optionally, the pilot generation module is configured to generate a first CSI-RS i and a second CSI-RS. The transmit signal processing module is configured to implement baseband processing such as encoding and modulation on a signal to obtain a baseband signal, and modulate the baseband signal into a radio frequency signal. The multi-array element antenna array may include a phase modulation unit, configured to complete sending of the first CSI-RS i and the second CSI-RS. The transmit port control module may be configured to control antenna port switching, so that the network device can send the first CSI-RS i through different first antenna ports at different measurement moments, and send the second CSI-RS through a same second antenna port. For example, the transmit port control module may control antenna port switching by controlling the phase modulation unit of the multi-array element antenna array, an antenna turn-off switch, or the like.

Optionally, the consistency error estimation module is configured to determine, based on first information reported by the terminal device, a result of channel measurement corresponding to the first CSI-RSs i, to estimate a consistency error. The consistency error compensation module is configured to compensate for a consistency error of channel array elements.

Refer to FIG. 11. The terminal device may include a receive antenna, a receive signal processing module, a channel estimation module, and a phase discrimination estimation module. Further, the terminal device may further include a phase discrimination compensation module.

Optionally, the receive antenna is configured to receive a radio frequency signal. The receive signal processing module is configured to: implement down-conversion, and restore a baseband signal. The channel estimation module is configured to determine a channel measurement quantity. The phase discrimination estimation module is configured to estimate a phase discrimination based on channel measurement quantities corresponding to N second CSI-RSs. The phase discrimination compensation module is configured to determine the results of the channel measurement corresponding to the first CSI-RSs i, or configured to compensate, based on the phase discrimination, a channel measurement quantity corresponding to the first CSI-RSs i.

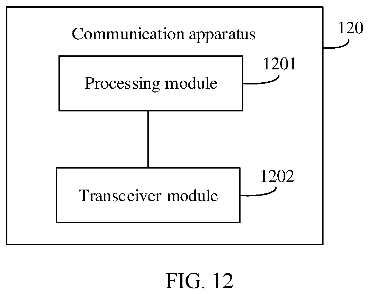

FIG. 12 is a diagram of a structure of another communication apparatus according to an embodiment of this application. The communication apparatus 120 includes a processing module 1201 and a transceiver module 1202. The communication apparatus 120 may be configured to implement functions of the foregoing network device or terminal device.

In some embodiments, the communication apparatus 120 may further include a storage module (which is not shown in FIG. 12), configured to store program instructions and data.

In some embodiments, the transceiver module 1202 may also be referred to as a transceiver unit, and is configured to implement a sending function and/or a receiving function. The transceiver module 1202 may include a transceiver circuit, a transceiver machine, a transceiver, or a communication interface.

In some embodiments, the transceiver module 1202 may include a receiving module and a sending module, respectively configured to perform receiving and sending steps performed by the network device or the terminal device in the foregoing method embodiments, and/or configured to support another process of the technology described in this specification. The processing module 1201 may be configured to perform processing (for example, determining or generation) steps performed by the network device or the terminal device in the foregoing method embodiments, and/or configured to support another process of the technology described in this specification.

When the communication apparatus 120 is configured to implement the functions of the foregoing terminal device:

The transceiver module 1202 is configured to receive first channel state information-reference signals CSI-RSs i from N first antenna ports of the network device, where i is a positive integer from 1 to N, N is a positive integer greater than 1, and the first CSI-RSs i are used for channel measurement. The transceiver module 1202 is further configured to receive N second CSI-RSs from a second antenna port of the network device, where the N second CSI-RSs are used for phase discrimination estimation. The transceiver module 1202 is further configured to send first information to the network device, where the first information indicates results of the channel measurement, and the results of the channel measurement are determined based on a phase discrimination and measurement quantities of the channel measurement.

Optionally, the processing module 1201 is configured to determine a phase discrimination based on M channel measurement quantities corresponding to M second CSI-RSs. M is a positive integer less than or equal to N.

Optionally, the processing module 1201 is specifically configured to determine a $j^{th}$ element of the phase discrimination based on a channel measurement quantity corresponding to a $j^{th}$ second CSI-RS, or determining a $j^{th}$ element of the phase discrimination based on a ratio of a channel measurement quantity corresponding to a $j^{th}$ second CSI-RS to a first value. Herein, j is a positive integer from 1 to M, and the M elements of the phase discrimination are located on a main diagonal of a phase discrimination matrix.

Optionally, the transceiver module 1202 is further configured to receive second information from the network device. The second information indicates the terminal device to estimate, based on channel measurement quantities corresponding to the second antenna port, a phase discrimination of channel measurement quantities corresponding to the N first antenna ports, or the second information indicates the terminal device to determine, based on channel measurement quantities corresponding to the second antenna port, results of channel measurement corresponding to the N first antenna ports.

Optionally, that the transceiver module 1202 is configured to receive a first CSI-RS I from the network device through a first antenna port I includes: The transceiver module 1202 is configured to repeatedly receive the first CSI-RS I K times through the first antenna port I. I is a positive integer from 1 to N, and K is a positive integer. That the transceiver module 1202 is configured to receive an $I^{th}$ second CSI-RS from the network device through the second antenna port includes: The transceiver module 1202 is configured to repeatedly receive the $I^{th}$ second CSI-RS K times through the second antenna port.

Optionally, the transceiver module 1202 is further configured to receive third information from the network device. The third information indicates a repetition quantity K of the first CSI-RS I.

Optionally, that the transceiver module 1202 is configured to send the first information to the network device includes: The transceiver module 1202 is configured to send the first information to the network device based on a reporting period.

When the communication apparatus 120 is configured to implement the functions of the foregoing network device:

The transceiver module 1202 is configured to send first channel state information-reference signals CSI-RSs i to the terminal device through N first antenna ports, where i is a positive integer from 1 to N, N is a positive integer greater than 1, and the first CSI-RSs i are used for channel measurement. The transceiver module 1202 is further configured to send N second CSI-RSs to the terminal device through a second antenna port, where the N second CSI-RSs are used to estimate a phase discrimination. The transceiver module 1202 is further configured to receive first information from the terminal device, where the first information indicates results of the channel measurement, and the results of the channel measurement are determined based on the phase discrimination and measurement quantities of the channel measurement.

Optionally, the transceiver module 1202 is further configured to send second information to the terminal device. The second information indicates the terminal device to estimate, based on channel measurement quantities corresponding to the second antenna port, a phase discrimination of channel measurement quantities corresponding to the N first antenna ports, or the second information indicates the terminal device to determine, based on channel measurement quantities corresponding to the second antenna port, results of channel measurement corresponding to the N first antenna ports.

Optionally, the transceiver module 1202 is specifically configured to repeatedly send a first CSI-RS I to the terminal device K times through a first antenna port I. I is a positive integer in 1 to N, and K is a positive integer. The transceiver module 1202 is specifically configured to repeatedly send an $I^{th}$ second CSI-RS to the terminal device K times through the second antenna port.

Optionally, the transceiver module 1202 is further configured to send third information to the terminal device. The third information indicates a repetition quantity K of the first CSI-RS I.

All related content of the steps in the foregoing method embodiments may be cited in function descriptions of the corresponding functional modules. Details are not described herein again.

In this application, the communication apparatus 120 is presented in a form of functional modules obtained through division in an integrated manner. The "module" herein may be an application-specific integrated circuit (application-specific integrated circuit, ASIC), a circuit, a processor that executes one or more software or firmware programs, a memory, an integrated logic circuit, and/or another component that can provide the foregoing functions.

In some embodiments, in terms of hardware implementation, a person skilled in the art may figure out that the communication apparatus 120 may be in a form of the communication apparatus 200 shown in FIG. 2.

In an example, a function/an implementation process of the processing module 1201 in FIG. 12 may be implemented by the processor 201 in the communication apparatus 200 shown in FIG. 2 by invoking computer-executable instructions stored in the memory 203. A function/an implementation process of the transceiver module 1202 in FIG. 12 may be implemented through the communication interface 204 in the communication apparatus 200 shown in FIG. 2.

In some embodiments, when the communication apparatus 120 in FIG. 12 is a chip or a chip system, the function/the implementation process of the transceiver module 1202 may be implemented through an input/output interface (or a communication interface) of the chip or the chip system, and the function/the implementation process of the processing module 1201 may be implemented by a processor (or a processing circuit) of the chip or the chip system.

The communication apparatus 120 provided in this embodiment may perform the foregoing methods. Therefore, for technical effects that can be achieved by the communication apparatus, refer to the foregoing method embodiments. Details are not described herein again.

In a possible product form, the network device or the terminal device in this embodiment of this application may be implemented by using one or more field programmable gate arrays (field programmable gate arrays, FPGAs), a programmable logic device (programmable logic device, PLD), a controller, a state machine, gate logic, a discrete hardware component, any other suitable circuit, or any combination of circuits that can perform various functions described throughout this application.

In some embodiments, an embodiment of this application further provides a communication apparatus. The communication apparatus includes a processor, configured to implement the method in any one of the foregoing method embodiments.

In a possible implementation, the communication apparatus further includes a memory. The memory is configured to store a necessary computer program and data. The computer program may include instructions. The processor may invoke the instructions in the computer program stored in the memory, to instruct the communication apparatus to perform the method in any one of the foregoing method embodiments. Certainly, the communication apparatus may not include a memory.

In another possible implementation, the communication apparatus further includes an interface circuit. The interface circuit is a code/data read/write interface circuit, and the interface circuit is configured to receive computer-executable instructions (the computer-executable instructions are stored in the memory, and may be directly read from the memory, or may be read via another component) and transmit the computer-executable instructions to the processor.

In still another possible implementation, the communication apparatus further includes a communication interface, and the communication interface is configured to communicate with a module other than the communication apparatus.

It may be understood that the communication apparatus may be a chip or a chip system. When the communication apparatus is a chip system, the communication apparatus may include a chip, or may include a chip and another discrete component. This is not specifically limited in embodiments of this application.

This application further provides a computer-readable storage medium. The computer-readable storage medium stores a computer program or instructions. When the computer program or instructions are executed by a computer, functions in any one of the foregoing method embodiments are implemented.

This application further provides a computer program product. When the computer program product is executed by a computer, functions of any one of the foregoing method embodiments are implemented.

A person of ordinary skill in the art may understand that, for the purpose of convenient and brief description, for a detailed working process of the foregoing system, apparatuses, and units, refer to a corresponding process in the foregoing method embodiments. Details are not described herein again.

It may be understood that the systems, apparatuses, and methods described in this application may alternatively be implemented in another manner. For example, the foregoing apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, that is, may be located at one position, or may be distributed on a plurality of network units. Parts displayed as units may or may not be physical units. Some or all of the units may be selected according to actual requirements to achieve the objectives of the solutions of embodiments.

In addition, functional units in embodiments of this application may be integrated into one processing unit, or each of the units may exist alone physically, or two or more units may be integrated into one unit.

All or some of the foregoing embodiments may be implemented by using software, hardware, firmware, or any combination thereof. When a software program is used to implement embodiments, embodiments may be implemented completely or partially in a form of computer program product. The computer program product includes one or more computer instructions. When the computer program instructions are loaded and executed on a computer, all or some of procedures (or functions) described in embodiments of this application are implemented. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk drive, or a magnetic tape), an optical medium (for example, a DVD), a semiconductor medium (for example, a solid-state drive (solid-state disk, SSD)), or the like. In embodiments of this application, the computer may include the foregoing apparatuses.

Although this application is described with reference to embodiments, in a process of implementing this application that claims protection, a person skilled in the art may understand and implement another variation of the disclosed embodiments by viewing the accompanying drawings, disclosed content, and appended claims. In the claims, "comprising" (comprising) does not exclude another component or another step, and "a" or "one" does not exclude a plurality. A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to them without departing from the spirit and scope of this application. Correspondingly, the specification and appended drawings are merely example description of this application defined by the appended claims, and are considered as any of or all modifications, variations, combinations or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the following claims and their equivalent technologies.

**Claims**

1. A channel measurement method, wherein the method comprises:

   receiving first channel state information-reference signals CSI-RSs i from N first antenna ports of a network device, wherein i is a positive integer from 1 to N, N is a positive integer greater than 1, and the first CSI-RSs i are used for channel measurement;
   receiving N second CSI-RSs from a second antenna port of the network device, wherein the N second CSI-RSs are used to estimate a phase discrimination; and
   sending first information to the network device, wherein the first information indicates results of the channel measurement, and the results of the channel measurement are determined based on the phase discrimination and measurement quantities of the channel measurement.

2. The method according to claim 1, wherein the first CSI-RS i and an $i^{th}$ second CSI-RS satisfy at least one of the following:

   a time domain position of the first CSI-RS i is the same as a time domain position of the $i^{th}$ second CSI-RS; or
   a frequency domain position of the first CSI-RS i is different from a frequency domain position of the $i^{th}$ second CSI-RS.

3. The method according to claim 1 or 2, wherein the method further comprises:
   determining the phase discrimination based on M channel measurement quantities corresponding to M second CSI-RSs, wherein M is a positive integer less than or equal to N.

4. The method according to claim 3, wherein the determining the phase discrimination based on M channel measurement quantities corresponding to M second CSI-RSs comprises:

   determining a $j^{th}$ element of the phase discrimination based on a channel measurement quantity corresponding to a $j^{th}$ second CSI-RS, or determining a $j^{th}$ element of the phase discrimination based on a ratio of a channel measurement quantity corresponding to a $j^{th}$ second CSI-RS to a first value, wherein
   j is a positive integer from 1 to M, and M elements of the phase discrimination are located on a main diagonal of a phase discrimination matrix.

5. The method according to claim 4, wherein the first value is a channel measurement quantity corresponding to an $m^{th}$ second CSI-RS, and m is a positive integer from 1 to M; or
   the first value is a preset value.

6. The method according to claim 4 or 5, wherein M is equal to N, and the phase discrimination matrix $\boldsymbol{D}$ satisfies:

$$\boldsymbol{D} = diag(\Delta\theta)$$

$$\Delta\theta = angle(\left[\frac{y_1^B}{c} \ \frac{y_2^B}{c} \ \frac{y_3^B}{c} \ \cdots \ \frac{y_N^B}{c}\right]), \text{ or } \Delta\theta = angle([y_1^B \ y_2^B \ y_3^B \ \cdots y_N^B ]),$$

wherein

   $diag$ is used to construct a diagonal matrix, $\Delta\theta$ is the phase discrimination, $angle$ is used to solve a phase angle, $y_j^B$ represents the channel measurement quantity corresponding to the $j^{th}$ second CSI-RS, and C represents the first value.

7. The method according to any one of claims 1 to 6, wherein the first information comprises the phase discrimination and the measurement quantities of the channel measurement; or

   the first information comprises the phase discrimination and a value obtained based on the measurement quantities of the channel measurement; or
   the first information comprises the results of the channel measurement.

8. The method according to any one of claims 1 to 7, wherein the method further comprises:
   receiving second information from the network device, wherein the second information indicates a terminal device to estimate, based on channel measurement quantities corresponding to the second antenna port, a phase discrimination of channel measurement quantities corresponding to the N first antenna ports, or the second information indicates a terminal device to determine, based on channel measurement quantities corresponding to the second antenna port, results of channel measurement corresponding to the N first antenna ports.

9. The method according to any one of claims 1 to 8, wherein receiving a first CSI-RS I from the network device through a first antenna port I comprises:

   repeatedly receiving the first CSI-RS I K times through the first antenna port I, wherein I is a positive integer from 1 to N, and K is a positive integer; and
   receiving an $I^{th}$ second CSI-RS from the network device through the second antenna port comprises:

repeatedly receiving the Ith second CSI-RS K times through the second antenna port.

10. The method according to claim 9, wherein the method further comprises:
receiving third information from the network device, wherein the third information indicates a repetition quantity K of the first CSI-RS I.

11. The method according to claim 9 or 10, wherein a channel measurement quantity corresponding to the first CSI-RS I is an average value of channel measurement quantities corresponding to the first CSI-RS I repeatedly received K times; and
a channel measurement quantity corresponding to the Ith second CSI-RS is an average value of channel measurement quantities corresponding to the Ith second CSI-RS repeatedly received K times.

12. The method according to any one of claims 1 to 11, wherein the result of the channel measurement, the phase discrimination, and the measurement quantity of the channel measurement satisfy:

$$Y_{comp}^A = [\exp(D)]^{-1} * Y^A,$$

wherein $Y_{comp}^A$ represents the result of the channel measurement, $D$ represents the phase discrimination matrix, wherein an element of the phase discrimination is located on the main diagonal of the phase discrimination matrix, $Y^A$ represents the measurement quantity of the channel measurement, and exp represents an exponential function with a natural constant e as a base.

13. The method according to any one of claims 1 to 12, wherein the sending first information to the network device comprises:
sending the first information to the network device based on a reporting period.

14. A channel measurement method, wherein the method comprises:

sending first channel state information-reference signals CSI-RSs i to a terminal device through N first antenna ports, wherein i is a positive integer from 1 to N, N is a positive integer greater than 1, and the first CSI-RSs i are used for channel measurement;
sending N second CSI-RSs to the terminal device through a second antenna port, wherein the N second CSI-RSs are used to estimate a phase discrimination; and
receiving first information from the terminal device, wherein the first information indicates results of the channel measurement, and the results of the channel measurement are determined based on the phase discrimination and measurement quantities of the channel measurement.

15. The method according to claim 14, wherein the first CSI-RS i and an ith second CSI-RS satisfy at least one of the following:

a time domain position of the first CSI-RS i is the same as a time domain position of the ith second CSI-RS; or
a frequency domain position of the first CSI-RS i is different from a frequency domain position of the ith second CSI-RS.

16. The method according to claim 14 or 15, wherein the phase discrimination is determined based on M channel measurement quantities corresponding to M second CSI-RSs, and M is a positive integer less than or equal to N.

17. The method according to claim 16, wherein the phase discrimination comprises M elements, and the M elements are located on a main diagonal of a phase discrimination matrix; and
a jth element is determined based on a channel measurement quantity corresponding to a jth second CSI-RS, or a jth element is determined based on a ratio of a channel measurement quantity corresponding to a jth second CSI-RS to a first value, wherein j is a positive integer from 1 to M.

18. The method according to claim 17, wherein the first value is a channel measurement quantity corresponding to an mth second CSI-RS, and m is a positive integer from 1 to M; or
the first value is a preset value.

19. The method according to claim 17 or 18, wherein M is equal to N, and the phase discrimination matrix $\boldsymbol{D}$ satisfies:

$$\boldsymbol{D} = diag(\Delta\theta)$$

$$\Delta\theta = angle\left(\left[\frac{y_1^B}{c} \ \frac{y_2^B}{c} \ \frac{y_3^B}{c} \ \cdots \ \frac{y_N^B}{c}\right]\right), \text{ or } \Delta\theta = angle([y_1^B \ y_2^B \ y_3^B \ \cdots y_N^B ]),$$

wherein

$diag$ is used to construct a diagonal matrix, $\Delta\theta$ is the phase discrimination, $angle$ is used to solve a phase angle, $y_j^B$ represents the channel measurement quantity corresponding to the j$^{th}$ second CSI-RS, and $C$ represents the first value.

20. The method according to any one of claims 14 to 19, wherein the first information comprises the phase discrimination and the measurement quantities of the channel measurement; or

the first information comprises the phase discrimination and a value obtained based on the measurement quantities of the channel measurement; or
the first information comprises the results of the channel measurement.

21. The method according to any one of claims 14 to 20, wherein the method further comprises:
sending second information to the terminal device, wherein the second information indicates the terminal device to estimate, based on channel measurement quantities corresponding to the second antenna port, a phase discrimination of channel measurement quantities corresponding to the N first antenna ports, or the second information indicates the terminal device to determine, based on channel measurement quantities corresponding to the second antenna port, results of channel measurement corresponding to the N first antenna ports.

22. The method according to any one of claims 14 to 21, wherein sending a first CSI-RS I to the terminal device through a first antenna port I comprises:

repeatedly sending the first CSI-RS I to the terminal device K times through the first antenna port I, wherein I is a positive integer from 1 to N, and K is a positive integer; and
sending an I$^{th}$ second CSI-RS to the terminal device through the second antenna port comprises:
repeatedly sending the I$^{th}$ second CSI-RS to the terminal device K times through the second antenna port.

23. The method according to claim 22, wherein the method further comprises:
sending third information to the terminal device, wherein the third information indicates a repetition quantity K of the first CSI-RS I.

24. The method according to any one of claims 14 to 23, wherein the result of the channel measurement, the phase discrimination, and the measurement quantity of the channel measurement satisfy:

$$\boldsymbol{Y}_{comp}^A = [\exp(\boldsymbol{D})]^{-1} * \boldsymbol{Y}^A,$$

wherein

$\boldsymbol{Y}_{comp}^A$ represents the result of the channel measurement, $\boldsymbol{D}$ represents the phase discrimination matrix, an element of the phase discrimination is located on the main diagonal of the phase discrimination matrix, $\boldsymbol{Y}^A$ represents the measurement quantity of the channel measurement, and exp represents an exponential function with a natural constant e as a base.

25. A communication apparatus, wherein the communication apparatus comprises a processor, and the processor is configured to run a computer program or instructions, to enable the communication apparatus to perform the method according to any one of claims 1 to 13.

26. A communication apparatus, wherein the communication apparatus comprises a processor, and the processor is configured to run a computer program or instructions, to enable the communication apparatus to perform the method according to any one of claims 14 to 24.

27. A computer-readable storage medium, wherein the computer-readable storage medium stores computer instructions or a program, and when the computer instructions or the program is run on a computer, the method according to any one of claims 1 to 13 is performed.

28. A computer-readable storage medium, wherein the computer-readable storage medium stores computer instructions or a program, and when the computer instructions or the program is run on a computer, the method according to any one of claims 14 to 24 is performed.

29. A computer program product, wherein the computer program product comprises computer instructions, and when a part or all of the computer instructions are run on a computer, the method according to any one of claims 1 to 13 is performed.

30. A computer program product, wherein the computer program product comprises computer instructions, and when a part or all of the computer instructions are run on a computer, the method according to any one of claims 14 to 24 is performed.

Network device

Terminal device

Terminal device

Terminal device

FIG. 1

200

201

203

Processor

CPU 0

CPU 1

Memory

202

204

205

206

Communication interface

Output device

Input device

FIG. 2

FIG. 3a

FIG. 3b

FIG. 4

```
┌──────────┐                                                    ┌──────────┐
│ Network  │                                                    │ Terminal │
│ device   │                                                    │ device   │
└────┬─────┘                                                    └────┬─────┘
     │                                                               │
     │   S501: Send first CSI-RSs i through N first antenna ports,   │
     │   where i is a positive integer from 1 to N, and the first    │
     │        CSI-RSs i are used for channel measurement             │
     │ ─────────────────────────────────────────────────────────▶   │
     │                                                               │
     │        S502: Send N second CSI-RSs through a second           │
     │     antenna port, where the N second CSI-RSs are used to      │
     │               estimate a phase discrimination                 │
     │ ─────────────────────────────────────────────────────────▶   │
     │                                                               │
     │   S503: First information, indicating results of the channel  │
     │ measurement corresponding to the first CSI-RSs i, where       │
     │       the results are determined based on the phase           │
     │   discrimination and channel measurement quantities           │
     │ ◀─────────────────────────────────────────────────────────   │
     │                                                               │
```

FIG. 5

Frequency domain

$M_1$     $M_2$     $M_{N-1}$     $M_N$

| | First CSI-RS 1 | | First CSI-RS 2 | ... | First CSI-RS N−1 | | First CSI-RS N |

Time domain position 1    Time domain position 2    Time domain position N−1    Time domain position N

| | Second CSI-RS | | Second CSI-RS | ... | Second CSI-RS | | Second CSI-RS |

Time domain position 1    Time domain position 2    Time domain position N−1    Time domain position N

Time domain

FIG. 6

First group of channels
- TX$_1$
- TX$_1$
- ...
- TX$_{q1}$

Second group of channels
- TX$_{q1+1}$
- TX$_{q1+2}$
- ...
- TX$_{q2}$

...

P$^{th}$ group of channels
- $TX_{q_{P-1}}$
- $TX_{q_{P-1}+1}$
- $TX_{q_P}$

Tx
- Array element x1
- Array element x2
- ⋮
- Array element xN

FIG. 7

| First CSI-RSs i are sent through N first antenna ports | N second CSI-RSs are sent through a first antenna port |
|---|---|
| Channel measurement | Channel measurement |
| Measurement quantities | Estimated phase discrimination |

Results of the channel measurement corresponding to the first CSI-RSs i

FIG. 8

FIG. 9

Frequency
domain

| | $M_1$ | | $M_2$ | $M_2$ | $M_2$ | | $M_N$ |
|---|---|---|---|---|---|---|---|
| | First CSI-RS 1 | | First CSI-RS 21 | First CSI-RS 22 | First CSI-RS 23 | ... | First CSI-RS N |

Time domain position 1          Time domain position 2          Time domain position N

| | Second CSI-RS | | Second CSI-RS 21 | Second CSI-RS 22 | Second CSI-RS 23 | ... | Second CSI-RS |
|---|---|---|---|---|---|---|---|

Time domain position 1          Time domain position 2          Time domain position N

Time domain

FIG. 10

FIG. 11

EP 4 572 263 A1

Communication apparatus

120

Processing module

1201

Transceiver module

1202

FIG. 12

## INTERNATIONAL SEARCH REPORT

| | International application No. |
|---|---|
| | **PCT/CN2022/127438** |

### A. CLASSIFICATION OF SUBJECT MATTER

H04L 27/00(2006.01)i

According to International Patent Classification (IPC) or to both national classification and IPC

### B. FIELDS SEARCHED

Minimum documentation searched (classification system followed by classification symbols)

IPC: H04L, H04B

Documentation searched other than minimum documentation to the extent that such documents are included in the fields searched

Electronic data base consulted during the international search (name of data base and, where practicable, search terms used)

CNTXT, ENTXT, EXTXTC, CNKI, 3GPP: 信道测量, 相位, 偏差, 估计, 信道状态信息, 参考信号, 时域, 频域, 端口, 矢量, 旋转, channel, estimate, phase, difference, CSI, RS, reference signal, time domain, frequency domain, vector, rotate

### C. DOCUMENTS CONSIDERED TO BE RELEVANT

| Category* | Citation of document, with indication, where appropriate, of the relevant passages | Relevant to claim No. |
|---|---|---|
| X | CN 108632005 A (HUAWEI TECHNOLOGIES CO., LTD.) 09 October 2018 (2018-10-09) description, paragraphs 350-458 | 1-3, 7, 8, 13-16, 20, 21, 25-30 |
| A | CATT. "R1-1702088, "Further discussion on RS for phase tracking"" *3GPP tsg_ran\WG1_RL1*, No. TSGR1_88, 07 February 2017 (2017-02-07), pages 1-5 | 1-30 |
| A | CN 106879010 A (BEIJING MQPAT TECHNOLOGY CO., LTD.) 20 June 2017 (2017-06-20) entire document | 1-30 |
| A | CN 112020092 A (HUAWEI TECHNOLOGIES CO., LTD.) 01 December 2020 (2020-12-01) entire document | 1-30 |
| A | CN 114389785 A (VIVO MOBILE COMMUNICATION CO., LTD.) 22 April 2022 (2022-04-22) entire document | 1-30 |

☑ Further documents are listed in the continuation of Box C.  ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **18 July 2023** | **26 July 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2022/127438** |

| C. | DOCUMENTS CONSIDERED TO BE RELEVANT | |
|---|---|---|
| Category* | Citation of document, with indication, where appropriate, of the relevant passages | Relevant to claim No. |
| A | WO 2021093707 A1 (VIVO MOBILE COMMUNICATION CO., LTD.) 20 May 2021 (2021-05-20) entire document | 1-30 |

Form PCT/ISA/210 (second sheet) (July 2022)

International application No.

**PCT/CN2022/127438**

| Patent document cited in search report | | | Publication date (day/month/year) | Patent family member(s) | | | Publication date (day/month/year) |
|---|---|---|---|---|---|---|---|
| CN | 108632005 | A | 09 October 2018 | US | 2021385113 | A1 | 09 December 2021 |
| | | | | EP | 3606219 | A1 | 05 February 2020 |
| | | | | EP | 3606219 | A4 | 18 March 2020 |
| | | | | EP | 3606219 | B1 | 08 March 2023 |
| | | | | US | 2020022172 | A1 | 16 January 2020 |
| | | | | JP | 2020516146 | A | 28 May 2020 |
| | | | | JP | 7061619 | B2 | 28 April 2022 |
| | | | | US | 2020021470 | A1 | 16 January 2020 |
| | | | | US | 11153134 | B2 | 19 October 2021 |
| | | | | JP | 2020516134 | A | 28 May 2020 |
| | | | | JP | 7217234 | B2 | 02 February 2023 |
| | | | | BR | 112019019951 | A2 | 28 April 2020 |
| | | | | KR | 20190126167 | A | 08 November 2019 |
| | | | | KR | 102308693 | B1 | 05 October 2021 |
| | | | | KR | 20190127899 | A | 13 November 2019 |
| | | | | KR | 102305312 | B1 | 28 September 2021 |
| | | | | BR | 112019019840 | A2 | 22 April 2020 |
| | | | | CA | 3057550 | A1 | 27 September 2018 |
| | | | | CA | 3057552 | A1 | 27 September 2018 |
| | | | | EP | 3605977 | A1 | 05 February 2020 |
| | | | | EP | 3605977 | A4 | 26 February 2020 |
| | | | | EP | 3605977 | B1 | 03 May 2023 |
| CN | 106879010 | A | 20 June 2017 | CN | 106879010 | B | 27 December 2019 |
| CN | 112020092 | A | 01 December 2020 | CN | 112020092 | B | 24 May 2023 |
| | | | | WO | 2020238682 | A1 | 03 December 2020 |
| CN | 114389785 | A | 22 April 2022 | WO | 2022078452 | A1 | 21 April 2022 |
| WO | 2021093707 | A1 | 20 May 2021 | CN | 112867049 | A | 28 May 2021 |

Form PCT/ISA/210 (patent family annex) (July 2022)